# EUROPEAN PATENT APPLICATION

(11) **EP 4 832 627 A1**
(43) Date of publication of application: **28.10.2026**
(21) Application number: 23961868.9
(22) Date of filing: 20.12.2023
(51) Int. Cl.: H04W 72/20

(54) **INFORMATION INDICATION METHOD, APPARATUS, AND STORAGE MEDIUM**

(71) Applicant: Beijing Xiaomi Mobile Software Co., Ltd., Beijing 100085 (CN)
(72) Inventor: LIU, Zhengxuan, Beijing 100085 (CN)
(74) Representative: Stöckeler, Ferdinand
(86) International application number: PCT/CN2023/140441
(87) International publication number: WO 2025/129529

(57) **Abstract**

The disclosure relates to an information indication method, an apparatus, and a storage medium. The method executed by a terminal comprises: receiving first configuration information sent by a network device, wherein the first configuration information is used by the terminal to determine the number of CSI-RS ports; and determining the number of CSI-RS ports on the basis of the first configuration information, wherein the number of CSI-RS ports is greater than 32. Thus, on the basis of the first configuration information sent by the network device, the terminal can determine the number of CSI-RS ports greater than 32, so that the configuration of a larger number of CSI-RS ports can be achieved, so as to support channel measurement with a larger number of CSI-RS ports, and improve the performance of a communication system.

## Description

### TECHNICAL FIELD

The disclosure relates to the field of communication technologies, and more particularly to a method and apparatus for indicating information, and a storage medium.

### BACKGROUND

In the related art, a terminal determines a quantity of channel status information-reference signal (CSI-RS) ports based on a first coefficient and a second coefficient corresponding to a CSI-RS resource configured by a network device. The quantity of CSI-RS ports determined only supports 1, 2, 4, 8, 12, 16, 24 and 32.

### SUMMARY

A method and apparatus for indicating information, and a storage medium provided in embodiments of the disclosure are employed to solve the problem in the related art that there is no support configuring a quantity of CSI-RS ports greater than 32 for a terminal.

Embodiments of the disclosure provide a method and apparatus for indicating information, and a storage medium.

According to a first aspect of embodiments of the disclosure, a method for indicating information is provided, which is performed by a terminal and includes: receiving first configuration information sent by a network device, in which the first configuration information is used for the terminal to determine a quantity of channel status information-reference signal (CSI-RS) ports; and determining the quantity of CSI-RS ports based on the first configuration information, in which the quantity of CSI-RS ports is greater than 32.

In the above embodiments, the terminal may determine the quantity of CSI-RS ports greater than 32 based on the first configuration information sent by the network device, which may realize a configuration of a larger quantity of CSI-RS ports to support a channel measurement with the larger quantity of CSI-RS ports and improve a performance of a communication system.

According to a second aspect of embodiments of the disclosure, a method for indicating information is provided, which is performed by a network device and includes: sending first configuration information to a terminal, in which the first configuration information is used for the terminal to determine a quantity of CSI-RS ports, and the quantity of CSI-RS ports is greater than 32.

In the above embodiments, the network device supports configuring the quantity of CSI-RS ports greater than 32 for the terminal, which may realize a configuration of a larger quantity of CSI-RS ports to support a channel measurement with the larger quantity of CSI-RS ports and improve a performance of a communication system.

According to a third aspect of embodiments of the disclosure, a method for indicating information is provided. The network device sends first configuration information to a terminal, in which the first configuration information is used for the terminal to determine a quantity of CSI-RS ports; the terminal receives the first configuration information sent by the network device; and the terminal determines the quantity of CSI-RS ports based on the first configuration information, in which the quantity of CSI-RS ports is greater than 32.

According to a fourth aspect of embodiments of the disclosure, a terminal is provided, which includes: a transceiver module, configured to receive first configuration information sent by a network device, in which the first configuration information is used for the terminal to determine a quantity of CSI-RS ports; and a processing module, configured to determine the quantity of CSI-RS ports based on the first configuration information, in which the quantity of CSI-RS ports is greater than 32.

According to a fifth aspect of embodiments of the disclosure, a network device is provided, which includes: a transceiver module, configured to send first configuration information to a terminal, in which the first configuration information is used for the terminal to determine a quantity of CSI-RS ports, and the quantity of CSI-RS ports is greater than 32.

According to a sixth aspect of embodiments of the disclosure, a communication device is provided, including: one or more processors and a memory coupled to the one or more processors and storing instructions which, when executed by the processor, cause the communication device to perform the method according to the first aspect.

According to a seventh aspect of embodiments of the disclosure, a communication device is provided, including: one or more processors and a memory coupled to the one or more processors and storing instructions which, when executed by the processor, cause the communication device to perform the method according to the second aspect.

According to an eighth aspect of embodiments of the disclosure, a communication system is provided, including: a terminal and a network device, in which the terminal is configured to perform the method according to the first aspect, and the network device is configured to perform the method according to the second aspect.

According to a ninth aspect of embodiments of the disclosure, a storage medium for storing instructions is provided. When the instructions are run on a communication device, the communication device is caused to perform the method according to any one of the first aspect or the second aspect.

### BRIEF DESCRIPTION OF THE DRAWINGS

To more clearly illustrate the technical solutions in embodiments of the disclosure, accompanying drawings used for the description of embodiments are introduced below. The following drawings are only some embodiments of the disclosure and do not impose detailed limitations on the protection scope of the disclosure.
FIG. 1 is a block diagram illustrating an architecture of a communication system according to an embodiment of the disclosure.
FIG. 2 is a flow chart illustrating a method for indicating information according to an embodiment of the disclosure.
FIG. 3 is a flow chart illustrating a method for indicating information according to another embodiment of the disclosure.
FIG. 4 is a flow chart illustrating a method for indicating information according to yet another embodiment of the disclosure.
FIG. 5A is a block diagram illustrating a terminal according to an embodiment of the disclosure.
FIG. 5B is a block diagram illustrating a network device according to an embodiment of the disclosure.
FIG. 6A is a block diagram illustrating a communication device according to an embodiment of the disclosure.
FIG. 6B is a block diagram illustrating a chip according to an embodiment of the disclosure.

### DETAILED DESCRIPTION

Embodiments of the disclosure provide a method and apparatus for indicating information, and a storage medium.

In a first aspect, embodiments of the disclosure provide a method for indicating information, performed by a terminal and including: receiving first configuration information sent by a network device, in which the first configuration information is used for the terminal to determine a quantity of channel status information-reference signal (CSI-RS) ports; and determining the quantity of CSI-RS ports based on the first configuration information, in which the quantity of CSI-RS ports is greater than 32.

In the above embodiments, the terminal may determine the quantity of CSI-RS ports greater than 32 based on the first configuration information sent by the network device, which may realize a configuration of a larger quantity of CSI-RS ports to support a channel measurement with the larger quantity of CSI-RS ports, and improve a performance of a communication system.

In combination with some embodiments of the first aspect, in some embodiments, determining, by the terminal, the quantity of CSI-RS ports according to the first configuration information includes: determining a first parameter and a second parameter based on the first configuration information; and determining the quantity of CSI-RS ports as a product by multiplying a product of the first parameter and the second parameter by two based on the first parameter and the second parameter.

In the above embodiments, the terminal determines the first parameter and the second parameter based on the first configuration information sent by the network device, and determines the quantity of CSI-RS ports as the product by multiplying the product of the first parameter and the second parameter by two based on the first parameter and the second parameter, which may realize the configuration of the larger quantity of CSI-RS ports to support the channel measurement with the larger quantity of CSI-RS ports and improve the performance of the communication system.

In combination with some embodiments of the first aspect, in some embodiments, the first configuration information indicates first coefficients and second coefficients corresponding to multiple CSI-RS resources, and the second coefficients corresponding to the multiple CSI-RS resources each are 1. Determining, by the terminal, the first parameter and the second parameter based on the first configuration information includes: determining the first parameter as a sum of the first coefficients corresponding to the multiple CSI-RS resources based on the first coefficients; and determining the second parameter as the second coefficient based on the second coefficient.

In the above embodiments, the terminal may determine the first parameter and the second parameter based on the first coefficients and the second coefficient, and determine the quantity of CSI-RS ports based on the first parameter and the second parameter, which may realize a configuration of a larger quantity of CSI-RS ports to support a channel measurement with the larger quantity of CSI-RS ports and improve the performance of communication system.

In combination with some embodiments of the first aspect, in some embodiments, the first configuration information indicates the first parameter and the second parameter.

In the above embodiments, the terminal may determine the first parameter and the second parameter based on the first configuration information, and determine the quantity of CSI-RS ports based on the first parameter and the second parameter, which may realize the configuration of the larger quantity of CSI-RS ports to support the channel measurement with the larger quantity of CSI-RS ports and improve the performance of the communication system.

In combination with some embodiments of the first aspect, in some embodiments, the first configuration information indicates a codebook subset restriction condition. Determining, by the terminal, the first parameter and the second parameter based on the first configuration information includes: determining the first parameter and the second parameter based on the codebook subset restriction condition.

In the above embodiments, the terminal may determine the first parameter and the second parameter based on the first configuration information, and determine the quantity of CSI-RS ports based on the first parameter and the second parameter, which may realize the configuration of the larger quantity of CSI-RS ports to support the channel measurement with the larger quantity of CSI-RS ports and improve the performance of the communication system.

In combination with some embodiments of the first aspect, in some embodiments, the first configuration information indicates first coefficients and second coefficients corresponding to multiple CSI-RS resources, and the multiple CSI-RS resources correspond to the same first coefficient and the same second coefficient. Determining, by the terminal, the first parameter and the second parameter based on the first configuration information includes: determining a first index and a second index, in which a product of the first index and the second index is equal to a total resource quantity of the multiple CSI-RS resources; determining the first parameter as a product of the first coefficient and the first index based on the first coefficient and the first index; and determining the second parameter as a product of the second coefficient and the second index based on the second coefficient and the second index.

In the above embodiments, the terminal may determine the first parameter and the second parameter based on the first coefficient and the second coefficient, and determine the quantity of CSI-RS ports based on the first parameter and the second parameter, which may realize the configuration of the larger quantity of CSI-RS ports to support the channel measurement with the larger quantity of CSI-RS ports and improve the performance of the communication system.

In combination with some embodiments of the first aspect, in some embodiments, determining, by the terminal, the first index and the second index includes: receiving indication information sent by the network device, in which the indication information indicates the first index and the second index; and determining the first index and the second index based on the indication information.

In the above embodiments, the terminal may determine the first index and the second index based on the indication information of the network device.

In combination with some embodiments of the first aspect, in some embodiments, the first configuration information indicates, in multiple CSI-RS resources, a first coefficient and a second coefficient corresponding to each of L CSI-RS resources in a first resource group, and a third coefficient and a fourth coefficient corresponding to each of M CSI-RS resources in a second resource group, where L and M each are integers greater than 1 and L + M is equal to a total resource quantity of the multiple CSI-RS resources, and the L CSI-RS resources in the first resource group correspond to the same first coefficient and the same second coefficient, and the M CSI-RS resources in the second resource group correspond to the same third coefficient and the same fourth coefficient, in which the first coefficient is not equal to the third coefficient and/or the second coefficient is not equal to the fourth coefficient. Determining, by the terminal, the first parameter and the second parameter based on the first configuration information includes: determining the first parameter and the second parameter based on the first coefficient, the second coefficient, the third coefficient, and the fourth coefficient.

In the above embodiments, the terminal may determine the first parameter and the second parameter based on the first coefficient and the second coefficient, and determine the quantity of CSI-RS ports based on the first parameter and the second parameter, which may realize the configuration of the larger quantity of CSI-RS ports to support the channel measurement with the larger quantity of CSI-RS ports and improve the performance of the communication system.

In combination with some embodiments of the first aspect, in some embodiments, determining the first parameter and the second parameter based on the first coefficient, the second coefficient, the third coefficient, and the fourth coefficient includes: in a case that a sum of second coefficients corresponding to the L CSI-RS resources in the first resource group is equal to the fourth coefficient, determining the first parameter as a total sum of the first coefficient and a sum of third coefficients corresponding to the M CSI-RS resources in the second resource group, and determining the second parameter to be equal to the fourth coefficient; or in a case that a sum of third coefficients corresponding to the M CSI-RS resources in the second resource group is equal to the first coefficient, determining the first parameter to be equal to the first coefficient, and determining the second parameter as a total sum of the fourth coefficient and a sum of the second coefficients corresponding to the L CSI-RS resources in the first resource group; or determining the first parameter as a total sum of the first coefficient and a sum of third coefficients corresponding to the M CSI-RS resources in the second resource group, and determining the second parameter as a total sum of the fourth coefficient and a sum of the second coefficients corresponding to the L CSI-RS resources in the first resource group.

In the above embodiments, the terminal may determine the first parameter and the second parameter based on the first coefficient and the second coefficient, and determine the quantity of CSI-RS ports based on the first parameter and the second parameter, which may realize the configuration of the larger quantity of CSI-RS ports to support the channel measurement with the larger quantity of CSI-RS ports and improve the performance of the communication system.

In combination with some embodiments of the first aspect, in some embodiments, the above method also includes: receiving, by the terminal, second configuration information sent by the network device, in which the second configuration information indicates one CSI-RS resource set, and the CSI-RS resource set includes the multiple CSI-RS resources.

In the above embodiments, the terminal supports determining the quantity of CSI-RS ports based on the first coefficient and the second coefficient of the multiple CSI-RS resources in the one CSI-RS resource set configured by the network device, which may realize the configuration of the larger quantity of CSI-RS ports to support the channel measurement with the larger quantity of CSI-RS ports and improve the performance of the communication system.

In combination with some embodiments of the first aspect, in some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a first coefficient corresponding to CSI-RS resources in a first resource group of the two resource groups is equal to a first coefficient corresponding to CSI-RS resources in a second resource group of the two resource groups. Determining, by the terminal, the first parameter and the second parameter based on the first configuration information includes: determining the first parameter to be equal to the first coefficient based on the first coefficient; and determining the second parameter as a total sum of a sum of second coefficients corresponding to all the CSI-RS resources in the first resource group and a sum of second coefficients corresponding to all the CSI-RS resources in the second resource group based on the second coefficients.

In the above embodiments, the terminal may determine the first parameter and the second parameter based on the first coefficients and the second coefficients, and determine the quantity of CSI-RS ports based on the first parameter and the second parameter, which may realize the configuration of the larger quantity of CSI-RS ports to support the channel measurement with the larger quantity of CSI-RS ports and improve the performance of communication system.

In combination with some embodiments of the first aspect, in some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a second coefficient corresponding to CSI-RS resources in a first resource group of the two resource groups is equal to a second coefficient corresponding to CSI-RS resources in a second resource group of the two resource groups. Determining, by the terminal, the first parameter and the second parameter based on the first configuration information includes: determining the first parameter as a total sum of a sum of first coefficients corresponding to all the CSI-RS resources in the first resource group and a sum of first coefficients corresponding to all the CSI-RS resources in the second resource group based on the first coefficients; and determining the second parameter to be equal to the second coefficient based on the second coefficient.

In the above embodiments, the terminal may determine the first parameter and the second parameter based on the first coefficients and the second coefficient, and determine the quantity of CSI-RS ports based on the first parameter and the second parameter, which may realize the configuration of the larger quantity of CSI-RS ports to support the channel measurement with the larger quantity of CSI-RS ports and improve the performance of the communication system.

In combination with some embodiments of the first aspect, in some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is greater than a first coefficient corresponding to CSI-RS resources in a second resource group of the two resource groups, and the first coefficient corresponding to the CSI-RS resources in the first resource group is equal to a sum of first coefficients corresponding to the CSI-RS resources in the second resource group. Determining, by the terminal, the first parameter and the second parameter based on the first configuration information includes: determining the first parameter as the first coefficient corresponding to the CSI-RS resources of the first resource group based on the first coefficient; and determining the second parameter as a total sum of a sum of second coefficients corresponding to all the CSI-RS resources in the first resource group and the second coefficient corresponding to the CSI-RS resources in the second resource group based on the second coefficients.

In the above embodiments, the terminal may determine the first parameter and the second parameter based on the first coefficient and the second coefficients, and determine the quantity of CSI-RS ports based on the first parameter and the second parameter, which may realize the configuration of the larger quantity of CSI-RS ports to support the channel measurement with the larger quantity of CSI-RS ports and improve the performance of the communication system.

In combination with some embodiments of the first aspect, in some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is less than a first coefficient corresponding to CSI-RS resources in a second resource group of the two resource groups, and a sum of second coefficients corresponding to all the CSI-RS resources in the first resource group is equal to the second coefficient corresponding to all the CSI-RS resources in the second resource group. Determining, by the terminal, the first parameter and the second parameter based on the first configuration information includes: determining the first parameter as a total sum of a sum of first coefficients corresponding to the CSI-RS resources of the second resource group and the first coefficient corresponding to the CSI-RS resources of the first resource group based on the first coefficients; and determining the second parameter as the second coefficient corresponding to the CSI-RS resources of the second resource group based on the second coefficient.

In the above embodiments, the terminal may determine the first parameter and the second parameter based on the first coefficients and the second coefficient, and determine the quantity of CSI-RS ports based on the first parameter and the second parameter, which may realize the configuration of the larger quantity of CSI-RS ports to support the channel measurement with the larger quantity of CSI-RS ports and improve the performance of the communication system.

In combination with some embodiments of the first aspect, in some embodiments, the first configuration information indicates first coefficients and second coefficients corresponding to multiple CSI-RS resources, and the multiple CSI-RS resources belong to multiple resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the plurality of resource groups is greater than a first coefficient corresponding to CSI-RS resources in any of other resource groups in the multiple resource groups, and the first coefficient corresponding to the CSI-RS resources in the first resource group is equal to a sum of first coefficients corresponding to all the CSI-RS resources in any of the other resource groups. Determining, by the terminal, the first parameter and the second parameter based on the first configuration information includes: determining the first parameter as the first coefficient corresponding to the CSI-RS resources of the first resource group based on the first coefficient; and determining the second parameter as a total sum of a sum of second coefficients corresponding to the CSI-RS resources in the first resource group and a sum of second coefficients corresponding to CSI-RS resources respectively in the other resource groups based on the second coefficients.

In the above embodiments, the terminal may determine the first parameter and the second parameter based on the first coefficient and the second coefficients, and determine the quantity of CSI-RS ports based on the first parameter and the second parameter, which may realize the configuration of the larger quantity of CSI-RS ports to support the channel measurement with the larger quantity of CSI-RS ports and improve the performance of the communication system.

In combination with some embodiments of the first aspect, in some embodiments, the first configuration information indicates first coefficients and second coefficients corresponding to multiple CSI-RS resources, and the multiple CSI-RS resources belong to multiple resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a second coefficient corresponding to CSI-RS resources in a first resource group of the multiple resource groups is greater than a second coefficient corresponding to CSI-RS resources in any of other resource groups, and the second coefficient corresponding to the CSI-RS resources in the first resource group is equal to a sum of second coefficients corresponding to all the CSI-RS resources in any of the other resource groups. Determining, by the terminal, the first parameter and the second parameter based on the first configuration information includes: determining the first parameter as a total sum of a sum of first coefficients corresponding to all the CSI-RS resources in the first resource group and a sum of first coefficients corresponding to CSI-RS resources respectively in the other resource groups based on the first coefficients; and determining the second parameter as the second coefficient corresponding to the CSI-RS resources of the first resource group based on the second coefficient.

In the above embodiments, the terminal may determine the first parameter and the second parameter based on the first coefficients and the second coefficient, and determine the quantity of CSI-RS ports based on the first parameter and the second parameter, which may realize the configuration of the larger quantity of CSI-RS ports to support the channel measurement with the larger quantity of CSI-RS ports and improve the performance of the communication system.

In combination with some embodiments of the first aspect, in some embodiments, the above method also includes: receiving, by the terminal, third configuration information sent by the network device, in which the third configuration information indicates multiple CSI-RS resource sets, the multiple CSI-RS resource sets include the multiple CSI-RS resources, and CSI-RS resources belonging to the same CSI-RS resource set belong to the same resource group.

In the above embodiments, the terminal supports determining the quantity of CSI-RS ports based on the first coefficient and the second coefficient of the multiple CSI-RS resources in the multiple CSI-RS resource sets configured by the network device, which may realize the configuration of the larger quantity of CSI-RS ports to support the channel measurement with the larger quantity of CSI-RS ports and improve the performance of the communication system.

In a second aspect, embodiments of the disclosure provide a method for indicating information, performed by a network device, including: sending first configuration information to a terminal, in which the first configuration information is used for the terminal to determine a quantity of CSI-RS ports, and the quantity of CSI-RS ports is greater than 32.

In the above embodiments, the network device supports configuring the quantity of CSI-RS ports greater than 32 for the terminal, which may realize a configuration of a larger quantity of CSI-RS ports to support a channel measurement with the larger quantity of CSI-RS ports and improve the performance of communication system.

In combination with some embodiments of the second aspect, in some embodiments, the first configuration information is used for the terminal to determine a first parameter and a second parameter, and the first parameter and the second parameter are used for the terminal to determine that the quantity of CSI-RS ports is a product by multiplying a product of the first parameter and the second parameter by two.

In combination with some embodiments of the second aspect, in some embodiments, the first configuration information indicates first coefficients and second coefficients corresponding to multiple CSI-RS resources, and the second coefficients corresponding to the multiple CSI-RS resources each are 1, in which the first coefficients are used for the terminal to determine that the first parameter is a sum of the first coefficients corresponding to the multiple CSI-RS resources; and the second coefficients are used for the terminal to determine that the second parameter is the second coefficient.

In combination with some embodiments of the second aspect, in some embodiments, the first configuration information indicates the first parameter and the second parameter.

In combination with some embodiments of the second aspect, in some embodiments, the first configuration information indicates a codebook subset restriction condition, and the codebook subset restriction condition is used for the terminal to determine the first parameter and the second parameter.

In combination with some embodiments of the second aspect, in some embodiments, the first configuration information indicates first coefficients and second coefficients corresponding to multiple CSI-RS resources, and the multiple CSI-RS resources correspond to the same first coefficient and the same second coefficient, in which the first parameter is determined as a product of the first coefficient and a first index in a case that the first coefficient is used for the terminal to determine the first index; and the second parameter is determined as a product of the second coefficient and a second index in a case that the second coefficient is used for the terminal to determine the second index.

In combination with some embodiments of the second aspect, in some embodiments, the above method also includes: sending, by the network device, indication information to the terminal, in which the indication information indicates the first index and the second index.

In combination with some embodiments of the second aspect, in some embodiments, the first configuration information indicates, in a plurality of CSI-RS resources, a first coefficient and a second coefficient corresponding to each of L CSI-RS resources in a first resource group, and a third coefficient and a fourth coefficient corresponding to each of M CSI-RS resources in a second resource group, where L and M each are integers greater than 1 and a sum of L and M is equal to a total resource quantity of the plurality of CSI-RS resources, and the L CSI-RS resources in the first resource group correspond to the same first coefficient and the same second coefficient, and the M CSI-RS resources in the second resource group correspond to the same third coefficient and the same fourth coefficient, in which the first coefficient is greater than the third coefficient, and the second coefficient is less than the fourth coefficient, in which the first coefficient, the second coefficient, the third coefficient, and the fourth coefficient are used for the terminal to determine the first parameter and the second parameter.

In combination with some embodiments of the second aspect, in some embodiments, in a case that a sum of second coefficients corresponding to the L CSI-RS resources in the first resource group is equal to the fourth coefficient, the first coefficient, the second coefficient, the third coefficient, and the fourth coefficient are used for the terminal to determine that the first parameter is a total sum of the first coefficient and a sum of third coefficients corresponding to the M CSI-RS resources in the second resource group, and the second parameter is equal to the fourth coefficient; or in a case that a sum of third coefficients corresponding to the M CSI-RS resources in the second resource group is equal to the first coefficient, the first coefficient, the second coefficient, the third coefficient, and the fourth coefficient are used for the terminal to determine that the first parameter is equal to the first coefficient, and the second parameter is a total sum of the fourth coefficient and a sum of the second coefficients corresponding to the L CSI-RS resources in the first resource group; or the first coefficient, the second coefficient, the third coefficient, and the fourth coefficient are used for the terminal to determine that the first parameter is a total sum of the first coefficient and a sum of third coefficients corresponding to the M CSI-RS resources in the second resource group, and the second parameter is a total sum of the fourth coefficient and a sum of the second coefficients corresponding to the L CSI-RS resources in the first resource group.

In combination with some embodiments of the second aspect, in some embodiments, the above method also includes: sending, by the network device, second configuration information to the terminal, in which the second configuration information indicates one CSI-RS resource set, and the CSI-RS resource set includes the multiple CSI-RS resources.

In combination with some embodiments of the second aspect, in some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a first coefficient corresponding to CSI-RS resources in a first resource group of the two resource groups is equal to a first coefficient corresponding to CSI-RS resources in a second resource group of the two resource groups, in which the first coefficient is used for the terminal to determine that the first parameter is equal to the first coefficient; and the second coefficients are used for the terminal to determine that the second parameter is a total sum of a sum of second coefficients corresponding to all the CSI-RS resources in the first resource group and a sum of second coefficients corresponding to all the CSI-RS resources in the second resource group.

In combination with some embodiments of the second aspect, in some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a second coefficient corresponding to CSI-RS resources in a first resource group of the two resource groups is equal to a second coefficient corresponding to CSI-RS resources in a second resource group of the two resource groups, in which the first coefficients are used for the terminal to determine that the first parameter is a total sum of a sum of first coefficients corresponding to all the CSI-RS resources in the first resource group and a sum of first coefficients corresponding to all the CSI-RS resources in the second resource group; and the second coefficient is used for the terminal to determine that the second parameter is equal to the second coefficient.

In combination with some embodiments of the second aspect, in some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is greater than a first coefficient corresponding to CSI-RS resources in a second resource group of the two resource groups, and the first coefficient corresponding to the CSI-RS resources in the first resource group is equal to a sum of first coefficients corresponding to the CSI-RS resources in the second resource group, in which the first coefficient is used for the terminal to determine that the first parameter is the first coefficient corresponding to the CSI-RS resources of the first resource group; and the second coefficients are used for the terminal to determine that the second parameter is a total sum of a sum of second coefficients corresponding to all the CSI-RS resources in the first resource group and the second coefficient corresponding to the CSI-RS resources in the second resource group.

In combination with some embodiments of the second aspect, in some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is less than a first coefficient corresponding to CSI-RS resources in a second resource group of the two resource groups, and a sum of second coefficients corresponding to all the CSI-RS resources in the first resource group is equal to the second coefficient corresponding to the CSI-RS resources in the second resource group, in which the first coefficients are configured for the terminal to determine that the first parameter is a total sum of a sum of first coefficients corresponding to the CSI-RS resources of the second resource group and the first coefficient corresponding to the CSI-RS resources of the first resource group; and the second coefficient is configured for the terminal to determine that the second parameter is the second coefficient corresponding to the CSI-RS resources of the second resource group.

In combination with some embodiments of the second aspect, in some embodiments, the first configuration information indicates first coefficients and second coefficients corresponding to multiple CSI-RS resources, and the multiple CSI-RS resources belong to multiple resource groups, different CSI-RS resources in the same resource group correspond to the same first coefficient and the same second coefficient, a products of a first coefficient and a second coefficient corresponding to CSI-RS resources in one resource group is not equal to a product of a first coefficient and a second coefficient corresponding to CSI-RS resources in a different resource group, a first coefficient corresponding to the CSI-RS resources in a first resource group in the plurality of resource groups is greater than first coefficients corresponding to CSI-RS resources respectively in other resource groups in the plurality of resource groups, and the first coefficient corresponding to the CSI-RS resources in the first resource group is equal to a sum of first coefficients corresponding to all CSI-RS resources in any of the other resource groups, in which the first coefficient is configured for the terminal to determine that the first parameter is the first coefficient corresponding to the CSI-RS resources of the first resource group; and the second coefficients are used for the terminal to determine that the second parameter is a total sum of a sum of the second coefficients corresponding to the CSI-RS resources in the first resource group and a sum of second coefficients corresponding to CSI-RS resources respectively in the other resource groups.

In combination with some embodiments of the second aspect, in some embodiments, the first configuration information indicates first coefficients and second coefficients corresponding to multiple CSI-RS resources, and the multiple CSI-RS resources belong to multiple resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a second coefficient corresponding to the CSI-RS resources in a first resource group in the multiple resource groups is greater than a second coefficient corresponding to CSI-RS resources in any of other resource groups, and the second coefficient corresponding to the CSI-RS resources in the first resource group is equal to a sum of second coefficients corresponding to all the CSI-RS resources in any of the other resource groups, in which the first coefficients are used for the terminal to determine the first parameter as a total sum of a sum of first coefficients corresponding to all the CSI-RS resources in the first resource group and a sum of first coefficients corresponding to CSI-RS resources respectively in the other resource groups; and the second coefficient is used for the terminal to determine that the second parameter is the second coefficient corresponding to the CSI-RS resources of the first resource group.

In combination with some embodiments of the second aspect, in some embodiments, the above method also includes: sending, by the network device, third configuration information to the terminal, in which the third configuration information indicates multiple CSI-RS resource sets, the multiple CSI-RS resource sets include the multiple CSI-RS resources, and CSI-RS resources belonging to the same CSI-RS resource set belong to the same resource group.

In a third aspect, embodiments of the disclosure provide a method for indicating information, in which a network device sends first configuration information to a terminal, in which the first configuration information is used for the terminal to determine a quantity of CSI-RS ports; the terminal receives second configuration information sent by the network device; and the terminal determines the quantity of CSI-RS ports based on the first configuration information, in which the quantity of CSI-RS ports is greater than 32.

In a fourth aspect, embodiments of the disclosure provide a terminal, including at least one of a transceiver module or a processing module, in which the terminal is configured to perform alternative implementations of the first aspect.

In a fifth aspect, embodiments of the disclosure provide a network device, including at least one of a transceiver module or a processing module, in which the network device is configured to perform alternative implementations of the second aspect.

In a sixth aspect, embodiments of the disclosure provide a communication device, including: one or more processors and a memory coupled to the one or more processors and storing instructions that, when performed by the processor, cause the communication device to perform the method of the first aspect.

In a seventh aspect, embodiments of the disclosure provide a communication device, including: one or more processors and a memory coupled to the one or more processors and storing instructions that, when executed by the processor, cause the communication device to perform the method of the second aspect.

In an eighth aspect, embodiments of the disclosure provide a communication system, including: a terminal and a network device, in which the terminal is configured to perform the method according to alternative implementations of the first aspect, and the network device is configured to perform the method according to alternative implementations of the second aspect.

In a ninth aspect, embodiments of the disclosure provide a storage medium for storing instructions. When the instructions are run on a communication device, the communication device is caused to perform the method according to alternative implementations of the first aspect or the second aspect.

In a tenth aspect, embodiments of the disclosure provide a program product. When the program product is performed by a communication device, the communication device is caused to perform the method according to alternative implementations of the first aspect or the second aspect.

In an eleventh aspect, embodiments of the disclosure provide a computer program. When the computer program is run on a computer, the computer is caused to perform the method according to alternative implementations of the first aspect or the second aspect.

In a twelfth aspect, embodiments of the disclosure provide a chip or chip system. The chip or the chip system includes a processing circuit, configured to perform the method according to alternative implementations of the first aspect or the second aspect.

It may be understood that the terminal, all the network device, the communication system, the storage medium, the program product, the computer program, the chip, or the chip system are configured to perform the method in the embodiments of the disclosure. Therefore, for beneficial effects they may achieve, please refer to the beneficial effects in the corresponding method, which will not be repeated here.

Embodiments of the disclosure provide a method and apparatus for indicating information, and a storage medium. In some embodiments, the terms such as information indicating method, information processing method, communication method, etc., may be used interchangeably.

Embodiments of the disclosure are not exhaustive, but are only illustrative, and are not intended to be a detailed limitation on the protection scope of the disclosure. In the absence of contradiction, each step in a certain embodiment may be implemented as an independent embodiment, and each step may be arbitrarily combined. For example, a solution after removing some steps in a certain embodiment may also be implemented as an independent embodiment, and an order of the steps in a certain embodiment may be arbitrarily exchanged. In addition, alternative implementations in a certain embodiment may be arbitrarily combined. In addition, respective embodiments may be arbitrarily combined, for example, some or all steps of different embodiments may be arbitrarily combined, and a certain embodiment may be arbitrarily combined with alternative implementations of other embodiments.

In various embodiments of the disclosure, unless otherwise specified or there is a logical conflict, the terms and/or descriptions between embodiments are consistent and reference to each other may be made, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In embodiments of the disclosure, "a plurality of" or "multiple" means two or more.

In some embodiments, the terms such as "at least one of", "one or more", "a plurality of", "multiple", etc. may be used interchangeably.

In some embodiments, the terms such as "at least one of A, B", "A and/or B", "in one case, A; in another case, B", "in response to one case, A; in response to another case, B", etc. may include the following technical solutions according to situations: in some embodiments, A (Ais performed independently of B); in some embodiments, B (B is performed independently of A); in some embodiments, one is selected from A and B to be executed (A and B are selectively executed); in some embodiments, A and B (both A and B are performed). When there are more branches such as A, B, C, etc., the above is applicable.

In some embodiments, the descriptions such as "A or B", etc. may include the following technical solutions according to situations: in some embodiments, A (A is performed independently of B); in some embodiments, B (B is performed independently of A); in some embodiments, one is selected from A and B to be performed (A and B are selectively performed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity or content of the descriptive objects. For the statement of the descriptive objects, please refer to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus, etc. may be interpreted as physical or virtual, and their names are not limited to the names recorded in embodiments. In some case, the terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as a device( such as, an access network device, a core network device, etc.,) included in a network.

In some embodiments, the terms such as "access network device (AN device)", "radio access network (RAN) device", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some embodiments, the access network device, the core network device, or the network device may be replaced with the terminal. For example, the structure where communication between access network devices, core network devices, or network devices and terminals is replaced with communication between multiple terminals (e.g., device-to-device (D2D), vehicle-to-everything (V2X), etc.) may also be applied to various embodiments of the disclosure. In this case, the terminal may also be configured to have all or some of the functions of the access network device. In addition, the terms such as "uplink" and "downlink" may be replaced with the terms (e.g., "sidelink") corresponding to the communication between terminals. For example, uplink channels or downlink channels may be replaced with side channels, and uplink links or downlink links may be replaced with side links.

In some embodiments, the terminal may be replaced with the access network device, the core network device, or the network device. In this case, the access network device, the core network device, or the network device may also be configured with all or some of the functions of the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the disclosure may be implemented as an independent embodiment. Any combination of elements, rows, or columns may also be implemented as an independent embodiment.

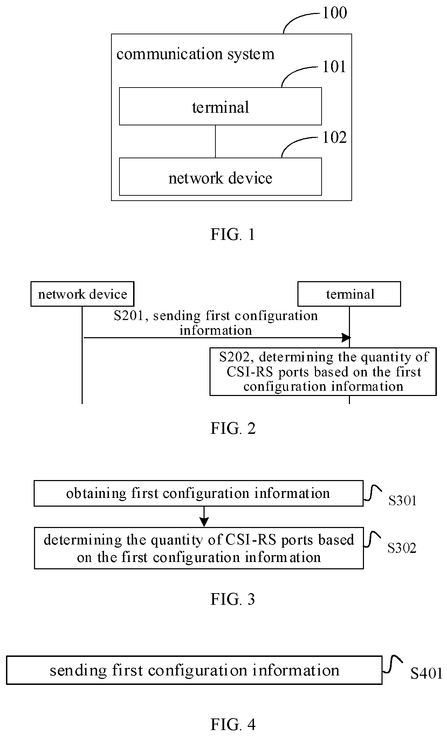

FIG. 1 is a block diagram illustrating an architecture of a communication system according to an embodiment of the disclosure.

As illustrated in FIG. 1, the communication system 100 includes a terminal 101 and a network device 102.

In some embodiments, the terminal 101 includes, such as, at least one of a mobile phone, a wearable device, an Internet of Things device, a car with a communication function, a smart car, and a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 may include at least one of an access network device or a core network device.

In some embodiments, the access network device is, such as, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, which is not limited herein.

In some embodiments, the core network device may be a device including a first network function, a second network function, etc. or may be multiple devices or device groups, each of which includes all or some of the first network function, the second network function, etc. The network function may be virtual or physical. The core network includes, such as, at least one of an evolved packet core (EPC), a 5G core network (5GCN), or a next generation core (NGC).

In some embodiments, the first network function is, such as, the access and mobility management function (AMF).

In some embodiments, the first network function is configured for access control and mobility management of terminal access to an operator network, such as functions including mobility state management, allocation of temporary user identity (ID), authentication and authorization of users, etc., and its name is not limited herein.

It may be understood that the communication system in the embodiments of the disclosure is for more clearly illustrating the technical solutions in embodiments of the disclosure and does not constitute a limitation on the technical solutions in embodiments of the disclosure. Those skilled in the art may understand that with the evolution of system architectures and the emergence of new service scenarios, the technical solutions in embodiments of the disclosure are also applicable to similar technical problems.

The following embodiments of the disclosure may be applied to the communication system 100 or some of the subjects illustrated in FIG. 1, but are not limited herein. The subjects illustrated in FIG. 1 are examples, and the communication system may include all or some of the subjects in FIG. 1, or may include other subjects than those illustrated in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the multiple systems may also be combined (such as, a combination of LTE or LTE-A and 5G, etc.) for application.

In the related art, a terminal determines a quantity of CSI-RS ports based on first coefficient and second coefficient corresponding to a CSI-RS resource configured by a network device. The quantity of CSI-RS ports determined only supports 1, 2, 4, 8, 12, 16, 24 and 32.

Based on this, embodiments of the disclosure provide a method and apparatus for indicating information, and a storage medium. A terminal receives first configuration information sent by a network device, in which the first configuration information is used for the terminal to determine a quantity of CSI-RS ports; and determines the quantity of CSI-RS ports based on the first configuration information, in which the quantity of CSI-RS ports is greater than 32. Therefore, the terminal may determine the quantity of CSI-RS ports greater than 32 based on the first configuration information sent by the network device, which may realize a configuration of a larger quantity of CSI-RS ports to support a channel measurement with the larger quantity of CSI-RS ports and improve a performance of a communication system.

FIG. 2 is a flow chart illustrating a method for indicating information according to an embodiment of the disclosure. As illustrated in FIG. 2, embodiments of the disclosure relate to the method for indicating information, which includes the following.

In S201, a network device sends first configuration information to a terminal, in which the first configuration information is used for the terminal to determine a quantity of CSI-RS ports.

In some embodiments, the network device sends a medium access control-control element (MAC CE) to the terminal, and the MAC CE includes the first configuration information.

In some embodiments, the network device sends downlink control information (DCI) to the terminal, and the DCI includes the first configuration information.

In some embodiments, the network device sends radio resource control (RRC) signaling to the terminal, and the RRC signaling includes the first configuration information.

In some embodiments, the first configuration information is used for the terminal to determine the quantity of CSI-RS ports.

In embodiments of the disclosure, the first configuration information may directly or indirectly indicate the quantity of CSI-RS ports.

For example, the first configuration information directly indicates that the quantity of CSI-RS ports is 48.

For example, the first configuration information indicates relevant information for determining the quantity of CSI-RS ports, and the relevant information may be used to determine the quantity of CSI-RS ports.

In S202, the quantity of CSI-RS ports is determined based on the first configuration information, and the quantity of CSI-RS ports is greater than 32.

In embodiments of the disclosure, the terminal receives the first configuration information sent by the network device and may determine the quantity of CSI-RS ports based on the first configuration information, in which the quantity of CSI-RS ports is greater than 32, thus realizing a configuration of a larger quantity of CSI-RS ports to support a channel measurement with the larger quantity of CSI-RS ports, and improving the performance of the communication system.

In some embodiments, the quantity of CSI-RS ports is 48, 64, 72, 96, or 128.

In some embodiments, determining, by the terminal, the quantity of CSI-RS ports based on the first configuration information includes: determining a first parameter and a second parameter based on the first configuration information; and determining the quantity of CSI-RS ports as twice a product of the first parameter and the second parameter based on the first parameter and the second parameter.

In embodiments of the disclosure, the first configuration information may directly or indirectly indicate the first parameter and the second parameter. The terminal may determine the first parameter and the second parameter based on the first configuration information, and then determine the quantity of CSI-RS ports as a product by multiplying the product of the first parameter and the second parameter by two based on the first parameter and the second parameter.

In some embodiments, the first parameter is a quantity of ports in a horizontal dimension, and the second parameter is a quantity of ports in a vertical dimension.

In some embodiments, the first parameter is a quantity of ports in a horizontal dimension of one polarization direction, and the second parameter is a quantity of ports in a vertical dimension of the polarization direction.

It is understandable that antenna ports are in dual-polarized directions. In one polarization direction, the quantity of ports in the horizontal dimension is the first parameter, and the quantity of ports in the vertical dimension is the second parameter. A quantity of antenna ports in different polarization directions is equal. Therefore, the quantity of antenna ports may be twice the product of the first parameter and the second parameter.

In some embodiments, the first configuration information indicates the first parameter and the second parameter.

In embodiments of the disclosure, the first configuration information indicates the first parameter and the second parameter, and the terminal may determine the first parameter and the second parameter based on the first configuration information.

For example, a configuration of the quantity of CSI-RS ports greater than 32 is determined by the terminal based on the first parameter and the second parameter determined by the first configuration information sent by the network device. In a case that the quantity of CSI-RS ports is greater than 32, such as 48, 64, 72, 96 and 128, the first parameter N₁ and the second parameter N₂ may be combined accordingly as illustrated in Table 1 below. In the table, O₁ and O₂ represent an oversampling factor of the horizontal dimension and an oversampling factor of the vertical dimension, respectively.

**Table 1**

| **Quantity of CSI-RS ports,** *P*_{CSI-RS} | (*N*₁,*N*₂) | (*O*₁,*O*₂) |
|---|---|---|
| 48 | (8,3) | (4,4) |
| | (6,4) | (4,4) |
| | (12,2) | (4,4) |
| 64 | (8,4) | (4,4) |
| | (16,2) | (4,4) |
| | (32,1) | (4,1) |
| 72 | (6,6) | (4,4) |
| | (36,1) | (4,1) |
| 96 | (8,6) | (4,4) |
| | (12,4) | (4,4) |
| | (16,3) | (4,4) |
| | (24,2) | (4,4) |
| | (48,1) | (4,1) |
| 128 | (8,8) | (4,4) |
| | (16,4) | (4,4) |
| | (32,2) | (4,4) |
| | (64,1) | (4,1) |

In some embodiments, the first parameter is 8 and the second parameter is 3; or the first parameter is 6 and the second parameter is 4; or the first parameter is 12 and the second parameter is 2; or the first parameter is 8 and the second parameter is 4; or the first parameter is 16 and the second parameter is 2; or the first parameter is 32 and the second parameter is 1; or the first parameter is 6 and the second parameter is 6; or the first parameter is 36 and the second parameter is 1; or the first parameter is 8 and the second parameter is 6; or the first parameter is 12 and the second parameter is 4; or the first parameter is 16 and the second parameter is 3; or the first parameter is 24 and the second parameter is 2; or the first parameter is 48 and the second parameter is 1; or the first parameter is 8 and the second parameter is 8; or the first parameter is 16 and the second parameter is 4; or the first parameter is 32 and the second parameter is 2; or the first parameter is 64 and the second parameter is 1.

In some embodiments, the first configuration information indicates a codebook subset restriction condition, and determining, by the terminal, the first parameter and the second parameter based on the first configuration information includes: determining the first parameter and the second parameter based on the codebook subset restriction condition.

In embodiments of the disclosure, the first configuration information indicates the codebook subset restriction condition. The terminal receives the first configuration information sent by the network device and may determine the first parameter and the second parameter based on the codebook subset restriction condition indicated by the first configuration information.

In some embodiments, the first configuration information indicates first coefficients and second coefficients corresponding to multiple CSI-RS resources, and the second coefficients corresponding to the multiple CSI-RS resources each are 1. Determining, by the terminal, the first parameter and the second parameter based on the first configuration information includes: determining the first parameter as a sum of the first coefficients corresponding to the multiple CSI-RS resources based on the first coefficients; and determining the second parameter as the second coefficient based on the second coefficient.

In embodiments of the disclosure, the first configuration information indicates the first coefficients and the second coefficients corresponding to the multiple CSI-RS resources.

In some embodiments, the first configuration information indicates a first coefficient and a second coefficient corresponding to each of the multiple CSI-RS resources.

Alternatively, in a case that the multiple CSI-RS resources correspond to the same first coefficient and the same second coefficient, the first configuration information sent by the network device may indicate first coefficients and second coefficients corresponding to some CSI-RS resources, that is, some CSI-RS resources do not need to be indicated by the first configuration information.

Alternatively, in a case that some CSI-RS resources correspond to the same first coefficient and the same second coefficient, the first configuration information may indicate a first coefficient and a second coefficient corresponding to a certain CSI-RS resource in some CSI-RS resources, and for remaining CSI-RS resources, may indicate that the remaining CSI-RS resources have the same first coefficient and the same second coefficient as such CSI-RS resource.

In some embodiments, the first configuration information indicates first coefficients and second coefficients corresponding to some CSI-RS resources in the multiple CSI-RS resources. Based on the first configuration information, the terminal defaults that a first coefficient corresponding to other CSI-RS resource than the some CSI-RS resources in the multiple CSI-RS resources is equal to a first coefficient corresponding to a certain CSI-RS resource in the some CSI-RS resources in the multiple CSI-RS resources, and defaults a second coefficients corresponding to the other CSI-RS resource than the some CSI-RS resources in the multiple CSI-RS resources is equal to a second coefficient corresponding to the certain CSI-RS resource in the some CSI-RS resources in the multiple CSI-RS resources.

In some embodiments, the first configuration information indicates first coefficients and second coefficients corresponding to some CSI-RS resources in the multiple CSI-RS resources, and indicates that the first coefficient corresponding to the other CSI-RS resource than the some CSI-RS resources in the multiple CSI-RS resources is equal to the first coefficient corresponding to the certain CSI-RS resource in the some CSI-RS resources in the multiple CSI-RS resources, and indicates that the second coefficient corresponding to the other CSI-RS resource than the some CSI-RS resources in the multiple CSI-RS resources is equal to the second coefficient corresponding to the certain CSI-RS resource in the some CSI-RS resources in the multiple CSI-RS resources.

In embodiments of the disclosure, the first configuration information sent by the network device indicates the multiple CSI-RS resources, and the second coefficients corresponding to the multiple CSI-RS resources each are 1. The terminal may determine the first parameter as the sum of the first coefficients corresponding to the multiple CSI-RS resources, and determine the second parameter as the second coefficient.

For example, the first configuration information sent by the network device indicates that a second coefficient corresponding to each CSI-RS resource in I CSI-RS resources is 1, that is, a second coefficient N_{2,i} of an i-th CSI-RS resource in the I CSI-RS resources is 1, that is, N_{2,i}=1, i ∈ {0, ... , I - 1}, and the terminal may determine the first parameter N₁ and the second parameter ${N}_{2} : {N}_{1} = {\sum }_{i = 0}^{I - 1} {N}_{1 , i}$, and N₂ = N_{2,i} = 1.

In some embodiments, in a case that the second coefficients corresponding to the multiple CSI-RS resources each are 1, the first coefficient is 2; or the first coefficient is 4; or the first coefficient is 6; or the first coefficient is 8; or the first coefficient is 12; or the first coefficient is 16.

In some embodiments, in a case that the second coefficients corresponding to the multiple CSI-RS resources each are 1, it is determined that the first parameter is 32; or it is determined the first parameter is 36; or it is determined that the first parameter is 48; or it is determined that the first parameter is 64.

In some embodiments, the first configuration information indicates a first coefficient and a second coefficient corresponding to each of multiple CSI-RS resources, and the multiple CSI-RS resources correspond to the same first coefficient and the same second coefficient. Determining, by the terminal, the first parameter and the second parameter based on the first configuration information includes: determining a first index and a second index, in which a product of the first index and the second index is equal to a total resource quantity of the multiple CSI-RS resources; determining the first parameter as a product of the first coefficient and the first index based on the first coefficient and the first index; and determining the second parameter as a product of the second coefficient and the second index based on the second coefficient and the second index.

In embodiments of the disclosure, the first configuration information indicates first coefficients and second coefficients corresponding to multiple CSI-RS resources, and the multiple CSI-RS resources correspond to the same first coefficient and the same second coefficient. The terminal may determine a first index and a second index, in which a product of the first index and the second index is equal to a total resource quantity of the multiple CSI-RS resources; and the first parameter is determined as a product of the first coefficient and the first index, and the second parameter is determined as a product of the second coefficient and the second index.

In some embodiments, the terminal determines the first index and the second index based on a protocol agreement, or based on an indication from the network device, or based on an implementation.

In some embodiments, determining, by the terminal, the first index and the second index includes: receiving indication information sent by the network device, in which the indication information indicates the first index and the second index; and determining the first index and the second index based on the indication information.

In embodiments of the disclosure, the terminal may receive the indication information sent by the network device, and the indication information indicates the first index and the second index. The terminal may determine the first index and the second index based on the indication information sent by the network device.

In some embodiments, the terminal receives an RRC signaling sent by the network device, and the RRC signaling includes the indication information.

In some embodiments, the terminal receives a DCI sent by the network device, and the DCI includes the indication information.

In some embodiments, the terminal receives an MAC CE sent by the network device, and the MAC CE includes the indication information.

For example, the first configuration information indicates a first coefficient N_{1,i} and a second coefficient N_{2,i} corresponding to each of the I CSI-RS resources, and all first coefficients N_{1,i} corresponding to the I CSI-RS resources are equal, and all second coefficients N_{2,i} corresponding to the I CSI-RS resources are also equal. The terminal receives the indication information sent by the network device, indicating the first index N_{g1} and the second index M_{g1}, and N_{g1} × M_{g1}=I, in which N_{g1} is a quantity of CSI-RS resources in the horizontal dimension and M_{g1} is a quantity of CSI-RS resources in the vertical dimension. The terminal may determine that the first parameter N₁ is a product of the first coefficient and the first index, and the second parameter N₂ is a product of the second coefficient and the second index: ${N}_{1} = {\sum }_{i = 0}^{{N}_{g} - 1} {N}_{1 , i} = {N}_{g 1} \times {N}_{1 , i}$and ${N}_{2} = {\sum }_{k = 0}^{{M}_{g} - 1} {N}_{2 , k} = {M}_{g 1} \times {N}_{2 , i}$. Therefore, it is determined that the quantity of CSI-RS ports is P_{CSI-RS} = 2N₁N₂.

For example, the network device configures one CSI-RS resource set for the terminal via the RRC signaling, and the CSI-RS resource set includes 4 CSI-RS resources. The first coefficient of each of the 4 CSI-RS resources is N_{1,i} = 8, and the second coefficient of each of the 4 CSI-RS resources is N_{2,i} = 2. The network device also configures a first index N_{g1} = 2 and a second index M_{g1} = 2 for the terminal. Therefore, the terminal may determine the first parameter N₁ and the second parameter N₂: N₁ = N_{g1} × N_{1,i} = 16, and N₂ = M_{g1} × N_{2,i} = 4. Then the terminal may determine the quantity of CSI-RS ports as P_{CSI-RS} = 2N₁N₂ = 128.

In some embodiments, the first configuration information indicates, in multiple CSI-RS resources, a first coefficient and a second coefficient corresponding to each of L CSI-RS resources in a first resource group, and a third coefficient and a fourth coefficient corresponding to each of M CSI-RS resources in a second resource group, where L and M each are integers greater than 1 and L+M is equal to a total resource quantity of the multiple CSI-RS resources, and the L CSI-RS resources in the first resource group correspond to the same first coefficient and the same second coefficient, and the M CSI-RS resources in the second resource group correspond to the same third coefficient and the same fourth coefficient. The first coefficient is not equal to the third coefficient and/or the second coefficient is not equal to the fourth coefficient. Determining, by the terminal, the first parameter and the second parameter based on the first configuration information includes: determining the first parameter and the second parameter based on the first coefficient, the second coefficient, the third coefficient, and the fourth coefficient.

In embodiments of the disclosure, the first configuration information indicates that the multiple CSI-RS resources belong to two resource groups: the first resource group and the second resource group, and there are the L CSI-RS resources in the first resource group, and there are the M CSI-RS resources in the second resource group. Each of the L CSI-RS resources in the first resource group corresponds to the first coefficient and the second coefficient, and each of the M CSI-RS resources in the second resource group corresponds to the third coefficient and the fourth coefficient, where L and M each are the integers greater than 1, and the sum of L and M is equal to the total resource quantity of the multiple CSI-RS resources. Furthermore, the L CSI-RS resources in the first resource group correspond to the same first coefficient and the same second coefficient, and the M CSI-RS resources in the second resource group correspond to the same third coefficient and the same fourth coefficient. The first coefficient is not equal to the third coefficient and/or the second coefficient is not equal to the fourth coefficient. Based on this, the terminal may determine the first parameter and the second parameter based on the first coefficient, the second coefficient, the third coefficient, and the fourth coefficient.

In some embodiments, determining, by the terminal, the first parameter and the second parameter based on the first coefficient, the second coefficient, the third coefficient, and the fourth coefficient includes: in a case that a sum of second coefficients corresponding to the L CSI-RS resources in the first resource group is equal to the fourth coefficient, determining the first parameter as a total sum of the first coefficient and a sum of third coefficients corresponding to the M CSI-RS resources in the second resource group, and determining the second parameter to be equal to the fourth coefficient; or in a case that the sum of the third coefficients corresponding to the M CSI-RS resources in the second resource group is equal to the first coefficient, determining the first parameter to be equal to the first coefficient, and determining the second parameter as a total sum of the fourth coefficient and a sum of the second coefficients corresponding to the L CSI-RS resources in the first resource group; or determining the first parameter as a total sum of the first coefficient and a sum of the third coefficients corresponding to the M CSI-RS resources in the second resource group, and determining the second parameter as a total sum of the fourth coefficient and a sum of the second coefficients corresponding to the L CSI-RS resources in the first resource group.

In embodiments of the disclosure, the first configuration information indicates that the multiple CSI-RS resources belong to two resource groups. Each of the L CSI-RS resources in the first resource group corresponds to the first coefficient and the second coefficient, and each of the M CSI-RS resources in the second resource group corresponds to the third coefficient and the fourth coefficient, where L and M each are the integers greater than 1 and L+M is equal to the total resource quantity of the multiple CSI-RS resources. Furthermore, the L CSI-RS resources in the first resource group correspond to the same first coefficient and the same second coefficient, and the M CSI-RS resources in the second resource group correspond to the same third coefficient and the same fourth coefficient. The first coefficient is not equal to the third coefficient and/or the second coefficient is not equal to the fourth coefficient. In a case that the sum of the second coefficients corresponding to the L CSI-RS resources in the first resource group is equal to the fourth coefficient, the terminal may determine that the first parameter is the total sum of the first coefficient and the sum of the third coefficients corresponding to the M CSI-RS resources in the second resource group, and the second parameter is equal to the fourth coefficient.

For example, the first configuration information indicates that I CSI-RS resources belong to two resource groups, where I is an integer greater than 1. First coefficients N_{1,i} corresponding to L≥ 1 CSI-RS resources in the first resource group each are equal, and second coefficients N_{2,i} corresponding to the L≥ 1 CSI-RS resources in the first resource group each are equal, where i ∈ {0, ..., L - 1}. Third coefficients ${N}_{1 , j}^{′}$ corresponding to M=I-L≥ 1 CSI-RS resources in the second resource group each are equal, and fourth coefficients ${N}_{2 , j}^{′}$ corresponding to the M=I-L≥ 1 CSI-RS resources in the second resource group each are equal, where j ∈ {0, ..., M - 1}, and ${N}_{1 , i} \neq {N}_{1 , j}^{′}$ and/or ${N}_{2 , i} \neq {N}_{2 , j}^{′}$. In a case that a sum of second coefficients corresponding to all the CSI-RS resources in the first resource group is equal to the fourth coefficient corresponding to any of the CSI-RS resources in the second resource group, i.e., ${\sum }_{i = 0}^{L - 1} {N}_{2 , i} = {N}_{2 , j}^{′}$, the terminal may determine the first parameter N₁ and the second parameter ${N}_{1} = {N}_{1 , i} + {\sum }_{j = 0}^{M - 1} {N}_{1 , j}^{′}$, and ${N}_{2} = {N}_{2 , j}^{′} = {\sum }_{i = 0}^{L - 1} {N}_{2 , i}$.

For example, the network device configures one CSI-RS resource set for the terminal via the RRC signaling, and the CSI-RS resource set includes 3 CSI-RS resources. The first configuration information indicates that the 3 CSI-RS resources belong to two resource groups. Two CSI-RS resources in the first resource group correspond to first coefficients N_{1,i} = 8 and second coefficients N_{2,i} = 2, where i ∈ {1,2}. A CSI-RS resource in the second resource group corresponds to a third coefficient ${N}_{1 , j}^{′} = 4$ and a fourth coefficient ${N}_{2 , j}^{′} = 4$, where j ∈ {3}, i.e., L=2 and M=I-L=1. Since ${\sum }_{i = 0}^{{L}_{1} - 1} {N}_{2 , i} = {N}_{2 , j}^{′} = 4$ may be combined and superimposed in a horizontal dimension direction, the terminal may determine the first parameter N₁ and the second parameter ${N}_{1} = {N}_{1 , i} + {\sum }_{j = 0}^{M - 1} {N}_{1 , j}^{′} = 8 + 4 = 12$, and ${N}_{2} = {N}_{2 , j}^{′} = 4$, and determine the quantity of CSI-RS ports as P_{CSI-RS} = 2N₁N₂ = 96.

In embodiments of the disclosure, the first configuration information indicates that the multiple CSI-RS resources belong to two resource groups. Each of the L CSI-RS resources in the first resource group corresponds to the first coefficient and the second coefficient, and each of the M CSI-RS resources in the second resource group corresponds to the third coefficient and the fourth coefficient, where L and M each are the integers greater than 1 and L+M is equal to the total resource quantity of the multiple CSI-RS resources. Furthermore, the L CSI-RS resources in the first resource group correspond to the same first coefficient and the same second coefficient, and the M CSI-RS resources in the second resource group correspond to the same third coefficient and the same fourth coefficient. The first coefficient is not equal to the third coefficient and/or the second coefficient is not equal to the fourth coefficient. In a case that the sum of the third coefficients corresponding to the M CSI-RS resources in the second resource group is equal to the first coefficient, the first parameter is determined to be equal to the first coefficient, and the second parameter is determined as the total sum of the fourth coefficient and the sum of the second coefficients corresponding to the L CSI-RS resources in the first resource group.

For example, the first configuration information indicates that I CSI-RS resources belong to two resource groups, where I is an integer greater than 1. First coefficients N_{1,i} corresponding to L≥ 1 CSI-RS resources in the first resource group each are equal, and second coefficients N_{2,i} corresponding to the L≥ 1 CSI-RS resources in the first resource group each are equal, where i ∈ {0, ..., L - 1}. Third coefficients ${N}_{1 , j}^{′}$ corresponding to M=I-L≥ 1 CSI-RS resources in the second resource group each are equal, and fourth coefficients ${N}_{2 , j}^{′}$ corresponding to the M=I-L≥ 1 CSI-RS resources in the second resource group each are equal, where j ∈ {0, ..., M - 1}, and ${N}_{1 , i} \neq {N}_{1 , j}^{′}$ and/or ${N}_{2 , i} \neq {N}_{2 , j}^{′}$. In a case that a sum of the third coefficients corresponding to all the CSI-RS resources in the second resource group is equal to the first coefficient corresponding to any of the CSI-RS resources in the first resource group, i.e., ${\sum }_{i = 0}^{L - 1} {N}_{1 , i} = {N}_{1 , j}^{′}$, the terminal may determine the first parameter N₁ and the second parameter ${N}_{1} = {N}_{1 , i} = {\sum }_{j = 0}^{M - 1} {N}_{1 , j}^{′}$, and ${N}_{2} = {N}_{2 , j}^{′} + {\sum }_{i = 0}^{L - 1} {N}_{2 , i}$.

In embodiments of the disclosure, the first configuration information indicates that the plurality of CSI-RS resources belong to two resource groups. Each of the L CSI-RS resources in the first resource group corresponds to the first coefficient and the second coefficient, and each of the M CSI-RS resources in the second resource group corresponds to the third coefficient and the fourth coefficient, where L and M each are the integers greater than 1 and L+M is equal to the total resource quantity of the multiple CSI-RS resources. Furthermore, the L CSI-RS resources in the first resource group correspond to the same first coefficient and the same second coefficient, and the M CSI-RS resources in the second resource group correspond to the same third coefficient and the same fourth coefficient. The first coefficient is not equal to the third coefficient and/or the second coefficient is not equal to the fourth coefficient. The terminal may determine the first parameter as the total sum of the first coefficient and the sum of the third coefficients corresponding to the M CSI-RS resources in the second resource group, and determine the second parameter as the total sum of the fourth coefficient and the sum of the second coefficients corresponding to the L CSI-RS resources in the first resource group.

For example, the first configuration information indicates that I CSI-RS resources belong to two resource groups, where I is an integer greater than 1. First coefficients N_{1,i} corresponding to L≥ 1 CSI-RS resources in the first resource group each are equal, and second coefficients N_{2,i} corresponding to the L≥ 1 CSI-RS resources in the first resource group each are equal, where i ∈ {0, ..., L - 1}. Third coefficients ${N}_{1 , j}^{′}$ corresponding to M=I-L≥ 1 CSI-RS resources in the second resource group each are equal, and fourth coefficients ${N}_{2 , j}^{′}$ corresponding to the M=I-L≥ 1 CSI-RS resources in the second resource group each are equal, where j ∈ {0, ..., M - 1}, and ${N}_{1 , i} \neq {N}_{1 , j}^{′}$ and/or ${N}_{2 , i} \neq {N}_{2 , j}^{′}$. The terminal may determine the first parameter N₁ and the second parameter ${N}_{1} = {N}_{1 , i} + {\sum }_{j = 0}^{M - 1} {N}_{1 , j}^{′}$, and ${N}_{2} = {N}_{2 , j}^{′} + {\sum }_{i = 0}^{L - 1} {N}_{2 , i}$.

In some embodiments, the above method also includes: receiving, by the terminal, second configuration information sent by the network device, and the second configuration information indicates one CSI-RS resource set, and the CSI-RS resource set includes the multiple CSI-RS resources.

In embodiments of the disclosure, the terminal may receive the second configuration information sent by the network device. The second configuration information indicates the one CSI-RS resource set, and the CSI-RS resource set includes the plurality of CSI-RS resources.

In some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a first coefficient corresponding to CSI-RS resources in a first resource group of the two resource groups is equal to a first coefficient corresponding to CSI-RS resources in a second resource group of the two resource groups. Determining, by the terminal, the first parameter and the second parameter based on the first configuration information includes: determining the first parameter to be equal to the first coefficient based on the first coefficient; and determining the second parameter as a total sum of a sum of second coefficients corresponding to all the CSI-RS resources in the first resource group and a sum of second coefficients corresponding to all the CSI-RS resources in the second resource group based on the second coefficients.

In embodiments of the disclosure, the first configuration information indicates that the multiple CSI-RS resources belong to two resource groups. In a case that different CSI-RS resources in the same resource group correspond to the same first coefficient and the same second coefficient, that is, the first coefficients of different CSI-RS resources in the same resource group are same, and the second coefficients of different CSI-RS resources in the same resource group are also same, and the products of the first coefficients and the second coefficients corresponding to CSI-RS resources respectively in different source groups are different, and when the first coefficient corresponding to the CSI-RS resources in the first resource group of the two resource groups is equal to the first coefficient corresponding to the CSI-RS resources in the second resource group of the two resource groups, the terminal may determine that the first parameter is equal to the first coefficient, and the second parameter as the total sum of the sum of the second coefficients corresponding to all the CSI-RS resources in the first resource group and the sum of the second coefficients corresponding to all the CSI-RS resources in the second resource group.

For example, the first configuration information indicates that I CSI-RS resources belong to two resource groups, where I is an integer greater than 1. First coefficients N_{1,i} corresponding to L CSI-RS resources in the first resource group each are equal, and second coefficients N_{2,i} corresponding to the L CSI-RS resources in the first resource group each are equal, where i ∈ {0, ..., L - 1}. First coefficients ${N}_{1 , j}^{′}$ corresponding to M=I-L CSI-RS resources in the second resource group each are equal, and second coefficients ${N}_{2 , j}^{′}$ corresponding to the M=I-L CSI-RS resources in the second resource group each are equal, where j ∈ {0, ..., M - 1}. In a case that ${N}_{1 , i} = {N}_{1 , j}^{′}$, the terminal may determine the first parameter N₁ and the second parameter ${N}_{1} = {N}_{1 , i} = {N}_{1 , j}^{′}$ and ${N}_{2} = {\sum }_{i = 0}^{L - 1} {N}_{2 , i} + {\sum }_{j = 0}^{M - 1} {N}_{2 , j}^{′}$ .

In some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a second coefficient corresponding to CSI-RS resources in a first resource group of the two resource groups is equal to a second coefficient corresponding to CSI-RS resources in a second resource group of the two resource groups. Determining, by the terminal, the first parameter and the second parameter based on the first configuration information includes: determining the first parameter as a total sum of a sum of first coefficients corresponding to all the CSI-RS resources in the first resource group and a sum of first coefficients corresponding to all the CSI-RS resources in the second resource group; and determining the second parameter to be equal to the second coefficient.

In embodiments of the disclosure, the first configuration information indicates that the plurality of CSI-RS resources belong to the two resource groups. In a case that different CSI-RS resources in the same resource group correspond to the same first coefficient and the same second coefficient, that is, the first coefficients of different CSI-RS resources in the same resource group are same, and the second coefficients of different CSI-RS resources in the same resource group are also same, and the product of the first coefficient and the second coefficient corresponding to CSI-RS resources in one resource group is not equal to the product of the first coefficient and the second coefficient corresponding to the CSI-RS resources in the different resource group, when the second coefficient corresponding to the CSI-RS resources in the first resource group of the two resource groups is equal to the second coefficient corresponding to CSI-RS resources in the second resource group of the two resource groups, the terminal may determine the first parameter as the total sum of the sum of first coefficients corresponding to all the CSI-RS resources in the first resource group and the sum of first coefficients corresponding to all the CSI-RS resources in the second resource group, and determine the second parameter to be equal to the second coefficient.

For example, the first configuration information indicates that I CSI-RS resources belong to two resource groups, where I is an integer greater than 1. First coefficients N_{1,i} corresponding to L CSI-RS resources in the first resource group each are equal, and second coefficients N_{2,i} corresponding to the L CSI-RS resources in the first resource group each are equal, where i ∈ {0, ..., L - 1}. First coefficients ${N}_{1 , j}^{′}$ corresponding to M=I-L CSI-RS resources in the second resource group each are equal, and second coefficients ${N}_{2 , j}^{′}$ corresponding to the M=I-L CSI-RS resources in the second resource group each are equal, where j ∈ {0, ..., M - 1}. In a case that ${N}_{2 , i} = {N}_{2 , j}^{′}$, the terminal may determine the first parameter N₁ and the second parameter ${N}_{2} = {N}_{2 , i} = {N}_{2 , j}^{′}$ and ${N}_{1} = {\sum }_{i = 0}^{L - 1} {N}_{1 , i} + {\sum }_{j = 0}^{M - 1} {N}_{1 , j}^{′}$ .

For example, the network device configures two CSI-RS resource sets for the terminal, each of the two CSI-RS resource sets includes two CSI-RS resources, and the first configuration information indicates that the two CSI-RS resources in each of the two CSI-RS resource sets belong to one resource group. First coefficients N_{1,i} corresponding to L=2 CSI-RS resources in a first resource group each are equal and second coefficients N_{2,i} corresponding to the L=2 CSI-RS resources in the first resource group each are equal, where N_{1,i} = 8 and N_{2,i} = 2, and i ∈ {0,1}. In addition, first coefficients ${N}_{1 , j}^{′}$ corresponding to two CSI-RS resources in a second resource group each are equal and second coefficients ${N}_{2 , j}^{′}$ corresponding to the two CSI-RS resources in the second resource group each are equal, where ${N}_{1 , j}^{′} = 4$ and ${N}_{2 , j}^{′} = 2$, and j ∈ {0,1}. Since ${N}_{2 , i} = {N}_{2 , j}^{′} = 2$, the terminal may determine the first parameter N₁ and the second parameter ${N}_{1} = {\sum }_{i = 0}^{L - 1} {N}_{1 , i} + {\sum }_{j = 0}^{M - 1} {N}_{1 , j}^{′} = 24$, and ${N}_{2} = {N}_{2 , i} = {N}_{2 , j}^{′} = 2$. Therefore, the terminal may determine that the quantity of CSI-RS ports is twice the product of the first parameter and second parameter, and the quantity of CSI-RS ports is ${P}_{CSI - RS}^{tot} = 2 {N}_{1} {N}_{2} = 96$.

In some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is greater than a first coefficient corresponding to CSI-RS resources in a second resource group of the two resource groups, and the first coefficient corresponding to the CSI-RS resources in the first resource group is equal to a sum of first coefficients corresponding to all the CSI-RS resources in the second resource group. Determining, by the terminal, the first parameter and the second parameter based on the first configuration information includes: determining the first parameter as the first coefficient corresponding to the CSI-RS resources of the first resource group based on the first coefficient; and determining the second parameter as a total sum of a sum of second coefficients corresponding to all the CSI-RS resources in the first resource group and the second coefficient corresponding to the CSI-RS resources in the second resource group based on the second coefficients.

In embodiments of the disclosure, the first configuration information indicates that the multiple CSI-RS resources belong to two resource groups. In a case that different CSI-RS resources in the same resource group correspond to the same first coefficient and the same second coefficient, that is, the first coefficients of different CSI-RS resources in the same resource group are same, and the second coefficients of different CSI-RS resources in the same resource group are also same, and the product of the first coefficient and the second coefficient corresponding to the CSI-RS resources in one resource group is not equal to the product of the first coefficient and the second coefficient corresponding to the CSI-RS resources in the different resource group, and when the first coefficient corresponding to the CSI-RS resources in the first resource group of the two resource groups is greater than the first coefficient corresponding to the CSI-RS resources in the second resource group of the two resource groups, and the first coefficient corresponding to the CSI-RS resources in the first resource group is equal to the sum of the first coefficients corresponding to the CSI-RS resources in the second resource group, the terminal may determine the first parameter as the first coefficient corresponding to the CSI-RS resources of the first resource group, and determine the second parameter as the total sum of the sum of the second coefficients corresponding to all the CSI-RS resources in the first resource group and the second coefficient corresponding to the CSI-RS resources in the second resource group.

For example, the first configuration information indicates that I CSI-RS resources belong to two resource groups, where I is an integer greater than 1. First coefficients N_{1,i} corresponding to L CSI-RS resources in the first resource group each are equal, and second coefficients N_{2,i} corresponding to the L CSI-RS resources in the first resource group each are equal, where i ∈ {0, ..., L - 1}. First coefficients ${N}_{1 , j}^{′}$ corresponding to M=I-L CSI-RS resources in the second resource group each are equal, and second coefficients ${N}_{2 , j}^{′}$ corresponding to the M=I-L CSI-RS resources in the second resource group each are equal, where j ∈ {0, ..., M - 1}. In a case that ${N}_{1 , i} > {N}_{1 , j}^{′}$ and ${N}_{1 , i} = {\sum }_{j = 0}^{M - 1} {N}_{1 , j}^{′}$, the terminal may determine the first parameter N₁ and the second parameter ${N}_{1} = {N}_{1 , i} = {\sum }_{j = 0}^{M - 1} {N}_{1 , j}^{′}$ and ${N}_{2} = {N}_{2 , j}^{′} + {\sum }_{i = 0}^{L - 1} {N}_{2 , i}$.

In some embodiments, the first configuration information indicates first coefficients and second coefficients corresponding to multiple CSI-RS resources, and the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is less than a first coefficient corresponding to CSI-RS resources in a second resource group of the two resource groups, and a sum of second coefficients corresponding to all the CSI-RS resources in the first resource group is equal to the second coefficient corresponding to the CSI-RS resources in the second resource group. Determining, by the terminal, the first parameter and the second parameter based on the first configuration information includes: determining the first parameter as a total sum of a sum of first coefficients corresponding to the CSI-RS resources of the second resource group and the first coefficient corresponding to the CSI-RS resources of the first resource group; and determining the second parameter as the second coefficient corresponding to the CSI-RS resources of the second resource group.

In embodiments of the disclosure, the first configuration information indicates that the multiple CSI-RS resources belong to the two resource groups. In a case that different CSI-RS resources in the same resource group correspond to the same first coefficient and the same second coefficient, that is, the first coefficients of different CSI-RS resources in the same resource group are same, and the second coefficients of different CSI-RS resources in the same resource group are also same, and the product of the first coefficient and the second coefficient corresponding to the CSI-RS resources in one resource group is not equal to the product of the first coefficient and the second coefficient corresponding to the CSI-RS resources in the different resource group, and when the first coefficient corresponding to the CSI-RS resources in the first resource group of the two resource groups is less than the first coefficient corresponding to the CSI-RS resources in the second resource group of the two resource groups, and the sum of the second coefficients corresponding to all the CSI-RS resources in the first resource group is equal to the second coefficient corresponding to the CSI-RS resources in the second resource group, the terminal may determine the first parameter as the total sum of the sum of the first coefficients corresponding to the CSI-RS resources of the second resource group and the first coefficient corresponding to the CSI-RS resources of the first resource group, and determine the second parameter as the second coefficient corresponding to the CSI-RS resources of the second resource group.

For example, the first configuration information indicates that I CSI-RS resources belong to two resource groups, where I is an integer greater than 1. First coefficients N_{1,i} corresponding to L CSI-RS resources in the first resource group each are equal, and second coefficients N_{2,i} corresponding to the L CSI-RS resources in the first resource group each are equal, where i ∈ {0, ..., L - 1}. First coefficients ${N}_{1 , j}^{′}$ corresponding to M=I-L CSI-RS resources in the second resource group each are equal, and second coefficients ${N}_{2 , j}^{′}$ corresponding to the M=I-L CSI-RS resources in the second resource group each are equal, where j ∈ {0, ..., M - 1}. In a case that ${N}_{1 , j}^{′} > {N}_{1 , i}$ and ${N}_{2 , j}^{′} = {\sum }_{i = 0}^{L - 1} {N}_{2 , i}$, the terminal may determine the first parameter N₁ and the second parameter ${N}_{1} = {\sum }_{j = 0}^{M - 1} {N}_{1 , j}^{′} + {N}_{1 , i}$ and ${N}_{2} = {N}_{2 , j}^{′} = {\sum }_{i = 0}^{L - 1} {N}_{2 , i}$.

In some embodiments, the first configuration information indicates first coefficients and second coefficients corresponding to multiple CSI-RS resources, and the multiple CSI-RS resources belong to multiple resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the multiple resource groups is greater than a first coefficient corresponding to CSI-RS resources in any of other resource groups of the multiple resource groups, and the first coefficient corresponding to the CSI-RS resources in the first resource group is equal to a sum of first coefficients corresponding to all CSI-RS resources in any of the other resource groups. Determining, by the terminal, the first parameter and the second parameter based on the first configuration information includes: determining the first parameter as the first coefficient corresponding to the CSI-RS resources of the first resource group based on the first coefficient; and determining the second parameter as a total sum of a sum of second coefficients corresponding to all the CSI-RS resources in the first resource group and a sum of second coefficients corresponding to CSI-RS resources respectively in the other resource groups based on the second coefficients.

In embodiments of the disclosure, the first configuration information indicates that the multiple CSI-RS resources belong to the multiple resource groups. In a case that different CSI-RS resources in the same resource group correspond to the same first coefficient and the same second coefficient, and the product of the first coefficient and the second coefficient corresponding to the CSI-RS resources in the one resource group is not equal to the product of the first coefficient and the second coefficient corresponding to the CSI-RS resources in the different resource group, when the first coefficient corresponding to the CSI-RS resources in the first resource group in the multiple resource groups is greater than the first coefficient corresponding to the CSI-RS resources in any of the other resource groups of the multiple resource groups, and the first coefficient corresponding to the CSI-RS resources in the first resource group is equal to the sum of the first coefficients corresponding to all the CSI-RS resources in any of the other resource groups, the terminal may determine the first parameter as the first coefficient corresponding to the CSI-RS resources of the first resource group, and determine the second parameter as the total sum of the sum of the second coefficients corresponding to all the CSI-RS resources in the first resource group and the sum of the second coefficients corresponding to the CSI-RS resources respectively in the other resource groups.

For example, the first configuration information indicates that I CSI-RS resources belong to J resource groups, where I and J each are integers greater than 1. Different CSI-RS resources in the same resource group correspond to the same first coefficient and the same second coefficient, and the product of the first coefficient and the second coefficient corresponding to the CSI-RS resources in the one resource group is not equal to the product of the first coefficient and the second coefficient corresponding to the CSI-RS resources in the different resource group, when the first coefficient corresponding to the CSI-RS resources Øⱼ in the first resource group of the multiple resource groups is greater than the first coefficient corresponding to the CSI-RS resources in any of the other resource groups of the multiple resource groups, that is, max{N_{1,i}}=N_{1,j}, in which the first coefficient N_{1,j} of the CSI-RS resources in the first resource group is a maximum value, and the first coefficient corresponding to the CSI-RS resources in the first resource group is equal to the sum of the first coefficients corresponding to all the CSI-RS resources in any of the other resource groups, that is, N_{1,j} = Σ_{k∈Øₗ} N_{1,lₖ}, where j ≠ l, and lₖ is a k^{-th} CSI-RS resource in an l^{-th} resource group, the terminal may determine the first parameter N₁: N₁ = N_{1,j} = Σ_{k∈Øₗ} N_{1,lₖ}, where j ≠ l, lₖ is the k^{-th} CSI-RS resource in the l^{-th} resource group, and Øₗ is CSI-RS resources in the l-th resource group, and determine the second parameter N₂ as the total sum of the sum of the second coefficients corresponding to all the CSI-RS resources in the first resource group and the sum of the second coefficients corresponding to the CSI-RS resources respectively in the other resource groups, that is, N₂ = Σ_{k∈Øⱼ} N_{2,jₖ} + Σ_{l≠j} N_{2,j}, where N_{2,j} is a second coefficient of a j^{-th} CSI-RS resource of the first resource group.

For example, the first configuration information indicates that 5 CSI-RS resources belong to 2 resource groups, and the 2 resource groups are the first resource group and the second resource group. A first CSI-RS resource in the first resource group is from a first CSI-RS resource set, and 4 CSI-RS resources in the second resource group are from a second CSI-RS resource set. Different CSI-RS resources in the same resource group correspond to the same first coefficient and the same second coefficient, and the product of the first coefficient and the second coefficient corresponding to the CSI-RS resources in the one resource group is not equal to the product of the first coefficient and the second coefficient corresponding to the CSI-RS resources in the different resource group, in which the CSI-RS resource of the first resource group corresponds to a first coefficient N_{1,1} = 8 and a second coefficient N_{2,1} = 2, and the CSI-RS resources of the second resource group correspond to a first coefficient N_{1,2} = 2 and a second coefficient N_{2,2} = 2. Therefore, the first coefficient corresponding to the CSI-RS resources in the first resource group is equal to the sum of the first coefficients corresponding to all the CSI-RS resources in any of the other resource groups, that is, N_{1,1} = Σ_{k∈Øₗ} N_{1,lₖ} = 8, where lₖ is a k^{-th} CSI-RS resource in an l^{-th} resource group, and Øₗ is CSI-RS resources in the l^{-th} resource group, the terminal may determine that the first parameter is the first coefficient corresponding to the CSI-RS resources of the first resource group, that is, N₁ = N_{1,1} = Σ_{k∈Øₗ} N_{1,lₖ} = 8, and the second parameter is the total sum of the sum of the second coefficients corresponding to the CSI-RS resources in the first resource group and the sum of the second coefficients corresponding to the CSI-RS resources respectively in the other resource groups, that is, N₂ = Σ_{k∈Øⱼ} N_{2,jₖ} + Σ_{l≠j} N_{2,j} = 2+2=4. Therefore, it is determined that the quantity of CSI-RS ports is ${P}_{CSI - RS}^{tot} = 2 {N}_{1} {N}_{2} = 64$.

In some embodiments, the first configuration information indicates first coefficients and second coefficients corresponding to multiple CSI-RS resources, and the multiple CSI-RS resources belong to multiple resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a second coefficient corresponding to CSI-RS resources in a first resource group in the multiple resource groups is greater than a second coefficient corresponding to CSI-RS resources in any of other resource groups, and the second coefficient corresponding to the CSI-RS resources in the first resource group is equal to a sum of second coefficients corresponding to all CSI-RS resources in any of the other resource groups. Determining, by the terminal, the first parameter and the second parameter based on the first configuration information includes: determining the first parameter as a total sum of a sum of first coefficients corresponding to all the CSI-RS resources in the first resource group and a sum of first coefficients corresponding to CSI-RS resources respectively in the other resource groups based on the first coefficients; and determining the second parameter as the second coefficient corresponding to the CSI-RS resources of the first resource group based on the second coefficient.

In embodiments of the disclosure, the first configuration information indicates that the multiple CSI-RS resources belong to the multiple resource groups. In a case that different CSI-RS resources in the same resource group correspond to the same first coefficient and the same second coefficient, and the product of the first coefficient and the second coefficient corresponding to the CSI-RS resources in the one resource groups is not equal to the product of the first coefficient and the second coefficient corresponding to the CSI-RS resources in the different resource group, when the second coefficient corresponding to the CSI-RS resources in the first resource group of the multiple resource groups is greater than any of the second coefficients corresponding to the CSI-RS resources respectively in the other resource groups of the multiple resource groups, and the second coefficient corresponding to the CSI-RS resources in the first resource group is equal to the sum of the second coefficients corresponding to all the CSI-RS resources in any of the other resource groups, the terminal may determine the first parameter as the total sum of the sum of the first coefficients corresponding to all the CSI-RS resources in the first resource group and the sum of the first coefficients corresponding to the CSI-RS resources respectively in the other resource groups, and determine the second parameter as the second coefficient corresponding to the CSI-RS resources of the first resource group.

For example, the first configuration information indicates that I CSI-RS resources belong to J resource groups, where I and J each are integers greater than 1. Different CSI-RS resources in the same resource group correspond to the same first coefficient and the same second coefficient, and the product of the first coefficient and the second coefficient corresponding to the CSI-RS resources in the one resource group is not equal to the product of the first coefficient and the second coefficient corresponding to the CSI-RS resources in the different resource group, when the second coefficient corresponding to the CSI-RS resources in the first resource group of the multiple resource groups is greater than any of the second coefficients corresponding to the CSI-RS resources respectively in the other resource groups of the multiple resource groups, that is, max{N_{2,i}}=N_{2,j}, in which the second coefficient N_{2,j} of the CSI-RS resources in the first resource group is a maximum value, and the second coefficient corresponding to the CSI-RS resources in the first resource group is equal to the sum of the second coefficients corresponding to all the CSI-RS resources in any of the other resource groups, that is, N_{2,j} = Σ_{k∈Øₗ} N_{2,lₖ}, where j ≠ l, lₖ is a k^{-th} CSI-RS resource in an l^{-th} resource group, and Øₗ is CSI-RS resources in the l^{-th} resource group, the terminal may determine the first parameter N₁ and the second parameter N₂. It is determined that the first parameter N₁ is the total sum of the sum of the first coefficients corresponding to all the CSI-RS resources in the first resource group and the sum of the first coefficients corresponding to the CSI-RS resources respectively in the other resource groups, i.e., N₁ = Σ_{k∈Øⱼ} N_{1,jₖ} + Σ_{l≠j} N_{1,l}, where j ≠ l, and lₖ is the k^{-th} CSI-RS resource in the l^{-th} resource group, and it is determined that the second parameter N₂ is the second coefficient corresponding to the CSI-RS resources of the first resource group, i.e., N₂ = N_{2,j} = E_{keØₗ} N_{2,lₖ}, where j ≠ l, and N_{2,j} is a second coefficient of a j-th CSI-RS resource of the first resource group.

In some embodiments, the method also includes: receiving, by the terminal, third configuration information sent by the network device, in which the third configuration information indicates multiple CSI-RS resource sets, the multiple CSI-RS resource sets include the multiple CSI-RS resources, and CSI-RS resources belonging to the same CSI-RS resource set belong to the same resource group.

In embodiments of the disclosure, the terminal may receive the third configuration information sent by the network device. The third configuration information indicates the multiple CSI-RS resource sets, the multiple CSI-RS resource sets include the multiple CSI-RS resources, and the CSI-RS resources belonging to the same CSI-RS resource set belong to the same resource group.

In some embodiments, the network device sends the first configuration information to the terminal. The first configuration information indicates a code book subset restriction (CBSR), and the CBSR indicates a first coefficient and a second coefficient corresponding to each of the plurality of CSI-RS resources.

In some embodiments, one CSI-RS resource corresponds to the first coefficient n₁ and the second coefficient n₂. For values of n₁ and n₂, please refer to Table 2 as illustrated below. In the table, O₁ and O₂ represent oversampling factors in the horizontal dimension and the vertical dimension, respectively.

**Table 2**

| **Quantity of CSI-RS ports,** *P*_{CSI-RS} | (n₁, n₂) | (*O*₁, *O*₂) |
|---|---|---|
| 4 | (2,1) | (4,1) |
| 8 | (2,2) | (4,4) |
| | (4,1) | (4,1) |
| 12 | (3,2) | (4,4) |
| | (6,1) | (4,1) |
| 16 | (4,2) | (4,4) |
| | (8,1) | (4,1) |
| 24 | (4,3) | (4,4) |
| | (6,2) | (4,4) |
| | (12,1) | (4,1) |
| 32 | (4,4) | (4,4) |
| | (8,2) | (4,4) |
| | (16,1) | (4,1) |

In some embodiments, the values of n₁ and n₂ are configured by the network device to the terminal via the RRC signaling.

In some embodiments, a configuration way of the first coefficient n₁ and the second coefficient n₂ corresponding to a Rel-15 Type I codebook is as follows:

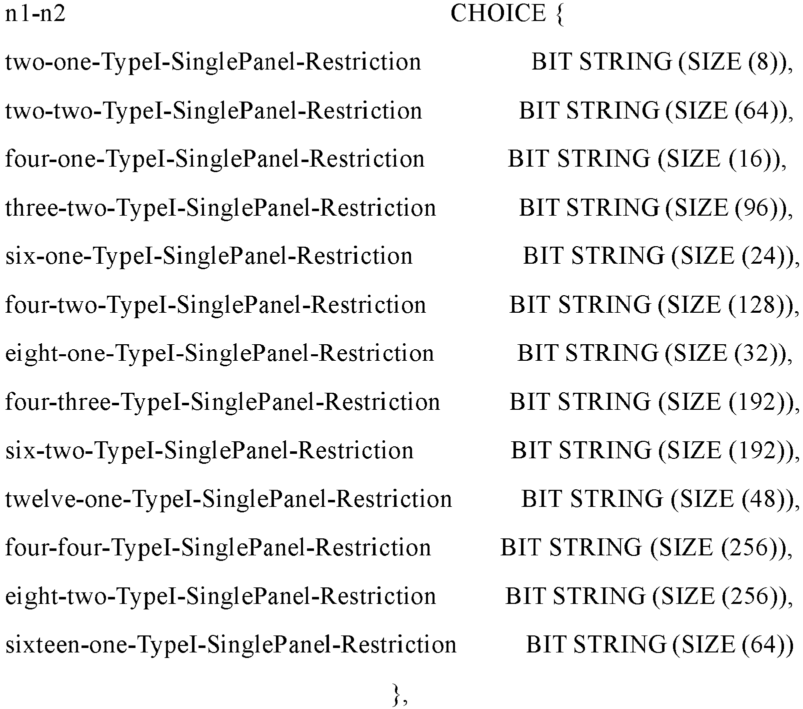

In some embodiments, a configuration way of the first coefficient n₁ and the second coefficient n₂ corresponding to a Rel-16 Type II codebook is as follows:

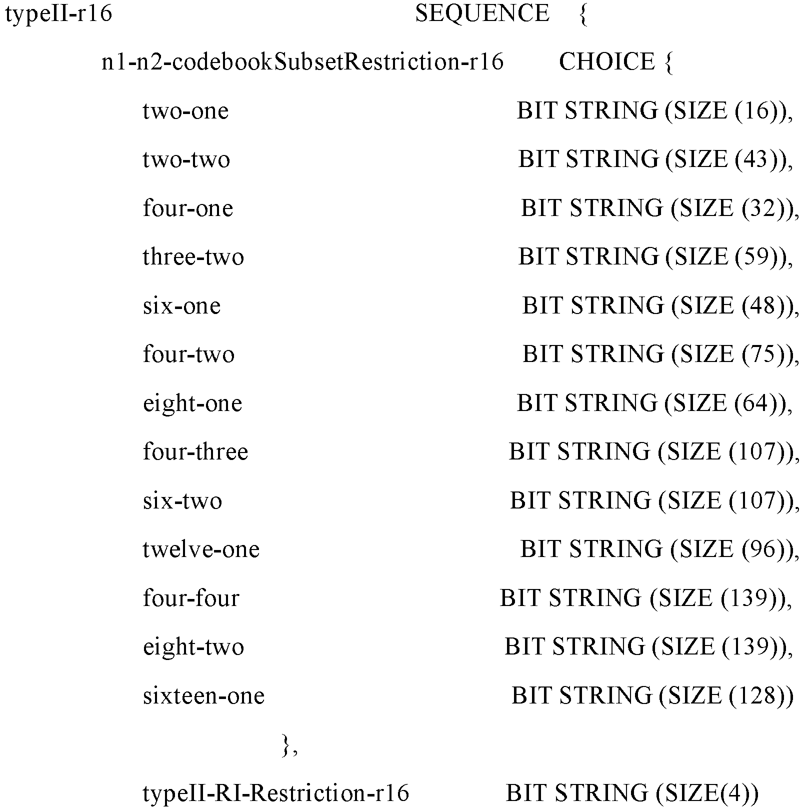

In some embodiments, the first coefficient is 2 and the second coefficient is 1; or the first coefficient is 2 and the second coefficient is 2; or the first coefficient is 4 and the second coefficient is 1; or the first coefficient is 3 and the second coefficient is 2; or the first coefficient is 6 and the second coefficient is 1; or the first coefficient is 4 and the second coefficient is 2; or the first coefficient is 8 and the second coefficient is 1; or the first coefficient is 4 and the second coefficient is 3; or the first coefficient is 6 and the second coefficient is 2; or the first coefficient is 12 and the second coefficient is 1; or the first coefficient is 4 and the second coefficient is 4; or the first coefficient is 8 and the second coefficient is 2; or the first coefficient is 16 and the second coefficient is 1.

In some embodiments, names are not limited to those specified in embodiments. The terms such as "information", "message", "signal", "signaling", "report", "configuration", "indication", "instruction", "command", "channel", "parameter", "domain", "field", "symbol", "symbol/code element", "codebook", "codeword", "codepoint", "bit", "data", "program", "chip", etc., may be used interchangeably.

In some embodiments, the terms such as "codebook", "codeword", "precoding matrix", etc., may be used interchangeably. For example, a codebook may be a collection of one or more codewords/precoding matrices.

In some embodiments, the terms such as "downlink control information (DCI)", "downlink (DL) assignment", "DL DCI", "uplink (UL) grant", "UL DCI", etc., may be used interchangeably.

In some embodiments, the terms such as "synchronization signal (SS)", "synchronization signal block (SSB)", "reference signal (RS)", "pilot", "pilot signal", etc., may be used interchangeably.

In some embodiments, the terms such as "precoding", "precoder", "weight", "precoding weight", "quasi-co-location (QCL)", "transmission configuration indication (TCI) status", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc., may be used interchangeably.

In some embodiments, the terms such as "acquiring", "obtaining", "getting", "receiving", "transmitting", "bidirectional transmission", "sending and/or receiving" may be used interchangeably, and they may be interpreted as receiving from another entity, obtaining from a protocol, obtaining from a high layer, obtaining via processing by itself, autonomously implementing, and other meanings.

In some embodiments, the terms such as "sending", "transmitting", "reporting", "delivering", "transmitting", "bidirectional transmission", "sending and/or receiving" may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

The communication methods involved in embodiments of the disclosure may include at least one of S201 to S202. For example, S201 may be implemented as an independent embodiment, and S202 may be implemented as an independent embodiment, which is not limited herein.

In some embodiments, S201 is alternative, and may be omitted or replaced in different embodiments.

By implementing embodiments of the disclosure, the terminal may determine the quantity of CSI-RS ports based on the first configuration information sent by the network device, and the quantity of CSI-RS ports is greater than 32, which may realize the configuration of the larger quantity of CSI-RS ports to support the channel measurement with the larger quantity of CSI-RS ports and improve the performance of the communication system.

FIG. 3 is a flow chart illustrating a method for indicating information according to an embodiment of the disclosure. As illustrated in FIG. 3, embodiments of the disclosure relate to the method for indicating information, which is performed by a terminal and includes the following.

In S301, first configuration information is obtained.

For an alternative implementation of S301, please refer to the alternative implementation of S201 in FIG. 2 and other related parts in the embodiments involved in FIG. 2, which will not be repeated here.

In some embodiments, the terminal receives the first configuration information sent by a network device or other entities/devices, which is not limited herein.

In some embodiments, the terminal obtains the first configuration information defined by a protocol.

In some embodiments, the terminal obtains the first configuration information from one or more upper layers.

In some embodiments, the terminal obtains the first configuration information by information processing.

In some embodiments, S301 is omitted, and the terminal autonomously implements the function indicated by the first configuration information, or the above function is omitted or set by default.

In some embodiments, the first configuration information is used for the terminal to determine a quantity of CSI-RS ports.

In some embodiments, the first configuration information indicates at least one of:
a first parameter and a second parameter;
a codebook subset restriction condition;
first coefficients and second coefficients corresponding to multiple CSI-RS resources, in which the second coefficients corresponding to multiple CSI-RS resources each are 1;
first coefficients and second coefficients corresponding to multiple CSI-RS resources, in which the multiple CSI-RS resources correspond to the same first coefficient and the same second coefficient;
in multiple CSI-RS resources, a first coefficient and a second coefficient corresponding to each of L CSI-RS resources in a first resource group, and a third coefficient and a fourth coefficient corresponding to each of M CSI-RS resources in a second resource group, where L and M each are integers greater than 1 and L+M is equal to a total resource quantity of the multiple CSI-RS resources, in which the L CSI-RS resources in the first resource group correspond to the same first coefficient and the same second coefficient, and the M CSI-RS resources in the second resource group correspond to the same third coefficient and the same fourth coefficient, in which the first coefficient is not equal to the third coefficient and/or the second coefficient is not equal to the fourth coefficient;
a first coefficient and a second coefficient corresponding to each CSI-RS resource in multiple CSI-RS resources, in which the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a first coefficient corresponding to CSI-RS resources in a first resource group of the two resource groups is equal to a first coefficient corresponding to CSI-RS resources in a second resource group of the two resource groups;
a first coefficient and a second coefficient corresponding to each CSI-RS resource in multiple CSI-RS resources, in which the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a second coefficient corresponding to CSI-RS resources in a first resource group of the two resource groups is equal to a second coefficient corresponding to CSI-RS resources in a second resource group of the two resource groups;
a first coefficient and a second coefficient corresponding to each CSI-RS resource in multiple CSI-RS resources, in which the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is greater than a first coefficient corresponding to CSI-RS resources in a second resource group of the two resource groups, and the first coefficient corresponding to the CSI-RS resources in the first resource group is equal to a sum of first coefficients corresponding to the CSI-RS resources in the second resource group;
a first coefficient and a second coefficient corresponding to each CSI-RS resource in multiple CSI-RS resources, in which the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is less than a first coefficient corresponding to CSI-RS resources in a second resource group of the two resource groups, and a sum of second coefficients corresponding to all the CSI-RS resources in the first resource group is equal to a second coefficient corresponding to the CSI-RS resources in the second resource group;
a first coefficient and a second coefficient corresponding to each CSI-RS resource in multiple CSI-RS resources, in which the multiple CSI-RS resources belong to a multiple resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the multiple resource groups is greater than any of first coefficients corresponding to CSI-RS resources respectively in other resource groups in the multiple resource groups, and the first coefficient corresponding to the CSI-RS resources in the first resource group is equal to a sum of first coefficients corresponding to all CSI-RS resources in any of the other resource groups; or
a first coefficient and a second coefficient corresponding to each CSI-RS resource in multiple CSI-RS resources, in which the multiple CSI-RS resources belong to multiple resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a second coefficient corresponding to CSI-RS resources in a first resource group in the multiple resource groups is greater than any of second coefficients corresponding to CSI-RS resources respectively in other resource groups of the multiple resource groups, and the second coefficient corresponding to the CSI-RS resources in the first resource group is equal to a sum of second coefficients corresponding to all CSI-RS resources in any of the other resource groups.

In S302, the quantity of CSI-RS ports is determined based on the first configuration information, in which the quantity of CSI-RS ports is greater than 32.

For an alternative implementation of S302, please refer to the alternative implementation of S202 in FIG. 2 and other related parts in the embodiments involved in FIG. 2, which will not be repeated here.

The communication methods involved in embodiments of the disclosure may include at least one of S301 to S302. For example, S301 may be implemented as an independent embodiment, and S302 may be implemented as an independent embodiment, which is not limited herein.

In some embodiments, S301 is alternative, and may be omitted or replaced in different embodiments.

FIG. 4 is a flow chart illustrating a method for indicating information according to an embodiment of the disclosure. As illustrated in FIG. 4, embodiments of the disclosure relate to the method for indicating information, which is performed by a network device and includes the following.

In S401, first configuration information is sent.

For an alternative implementation of S401, please refer to the alternative implementation of S201 in FIG. 2 and other related parts in the embodiments involved in FIG. 2, which will not be repeated here.

In some embodiments, the network device sends the first configuration information to a terminal or other entities/devices, which is not limited herein.

In some embodiments, the first configuration information is used for the terminal to determine a quantity of CSI-RS ports, and the quantity of CSI-RS ports is greater than 32.

In some embodiments, the first configuration information indicates at least one of:
a first parameter and a second parameter;
a codebook subset restriction condition;
first coefficients and second coefficients corresponding to multiple CSI-RS resources, in which the second coefficients corresponding to the multiple CSI-RS resources each are 1;
first coefficients and second coefficients corresponding to multiple CSI-RS resources, in which the multiple CSI-RS resources correspond to the same first coefficient and the same second coefficient;
in multiple CSI-RS resources, a first coefficient and a second coefficient corresponding to each of L CSI-RS resources in a first resource group, and a third coefficient and a fourth coefficient corresponding to each of M CSI-RS resources in a second resource group, where L and M each are integers greater than 1 and L+M is equal to a total resource quantity of the multiple CSI-RS resources, in which the L CSI-RS resources in the first resource group correspond to the same first coefficient and the same second coefficient, and the M CSI-RS resources in the second resource group correspond to the same third coefficient and the same fourth coefficient, in which the first coefficient is not equal to the third coefficient and/or the second coefficient is not equal to the fourth coefficient;
a first coefficient and a second coefficient corresponding to each CSI-RS resource in multiple CSI-RS resources, in which the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a first coefficient corresponding to CSI-RS resources in a first resource group of the two resource groups is equal to a first coefficient corresponding to CSI-RS resources in a second resource group of the two resource groups;
a first coefficient and a second coefficient corresponding to each CSI-RS resource in multiple CSI-RS resources, in which the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a second coefficient corresponding to CSI-RS resources in a first resource group of the two resource groups is equal to a second coefficient corresponding to CSI-RS resources in a second resource group of the two resource groups;
a first coefficient and a second coefficient corresponding to each CSI-RS resource in multiple CSI-RS resources, in which the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group of the two resource groups, a first coefficient corresponding to CSI-RS resources in a first resource group of the two resource groups is greater than a first coefficient corresponding to CSI-RS resources in a second resource group of the two resource groups, and the first coefficient corresponding to the CSI-RS resources in the first resource group is equal to a sum of first coefficients corresponding to all the CSI-RS resources in the second resource group;
a first coefficient and a second coefficient corresponding to each CSI-RS resource in multiple CSI-RS resources, in which the multiple CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is less than a first coefficient corresponding to CSI-RS resources in a second resource group of the two resource groups, and a sum of second coefficients corresponding to all the CSI-RS resources in the first resource group is equal to the second coefficient corresponding to all the CSI-RS resources in the second resource group;
a first coefficient and a second coefficient corresponding to each CSI-RS resource in multiple CSI-RS resources, in which the multiple CSI-RS resources belong to multiple resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group in the multiple resource groups is greater than any of first coefficients corresponding to CSI-RS resources respectively in other resource groups of the multiple resource groups, and the first coefficient corresponding to the CSI-RS resources in the first resource group is equal to a sum of first coefficients corresponding to all CSI-RS resources in any of the other resource groups; or
a first coefficient and a second coefficient corresponding to each CSI-RS resource in multiple CSI-RS resources, in which the multiple CSI-RS resources belong to multiple resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a second coefficient corresponding to CSI-RS resources in a first resource group of the multiple resource groups is greater than any of second coefficients corresponding to CSI-RS resources in other resource groups of the multiple resource groups, and the second coefficient corresponding to the CSI-RS resources in the first resource group is equal to a sum of second coefficients corresponding to all CSI-RS resources in any of the other resource groups.

Alternatively, the above first configuration information is used for the terminal to determine the quantity of CSI-RS ports. For the alternative implementation, please refer to the alternative implementation of S202 in FIG. 2 and other related parts in the embodiments involved in FIG. 2, which will not be repeated here.

Embodiments of the disclosure also provide an apparatus for implementing any one of the above methods. For example, an apparatus is provided, including units or modules for implementing the steps performed by the terminal in any one of the above methods. For another example, another apparatus is provided, including units or modules for implementing steps performed by the network device (for example, an access network device, a core network function node, a core network device, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Alternatively, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are implemented by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor calling and the remaining part implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

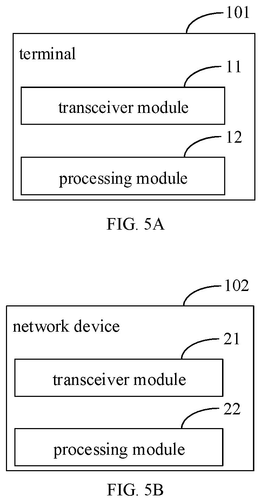

FIG. 5A is a block diagram illustrating a terminal according to an embodiment of the disclosure. As illustrated in FIG. 5A, the terminal 100 may include at least one of: a transceiver module 11, a processing module 12, etc.

In some embodiments, the above transceiver module 11 is configured to receive first indication information sent by a network device, and the first indication information is used for the terminal to determine a quantity of CSI-RS ports. The processing module 12 is configured to determine the quantity of CSI-RS ports based on the first indication information, and the quantity of CSI-RS ports is greater than 32.

The above transceiver module 11 is configured to perform at least one of the communication steps such as sending and/or receiving (e.g., S201, S301, S401, but not limited herein) performed by the terminal 101 in any of the above methods, which will not be repeated here. Alternatively, the processing module 22 is configured to perform at least one of the other steps (e.g., S202, S302, but not limited herein) performed by the terminal 101 in any of the above methods, which will not be repeated here.

In some embodiments, the transceiver module may include a sending module and/or a receiving module. The sending module and the receiving module may be separate or integrated together. Alternatively, the transceiver module may be interchanged with a transceiver.

In some embodiments, the processing module may be one module or may include multiple sub-modules. Alternatively, the multiple sub-modules respectively perform all or some of the steps required to be performed by the processing module. Alternatively, the processing module may be interchanged with a processor.

FIG. 5B is a block diagram illustrating a network device according to an embodiment of the disclosure. As illustrated in FIG. 5B, the network device 102 may include at least one of: a transceiver module 21, a processing module 22, etc.

In some embodiments, the above transceiver module 21 is configured to send first indication information to a terminal, and the first indication information is used for the terminal to determine a quantity of CSI-RS ports, and the quantity of CSI-RS ports is greater than 32.

The above transceiver module 21 is used to perform at least one of the communication steps such as sending and/or receiving (e.g., S201, S301, S401, but not limited herein) performed by the network device 102 in any of the above methods, which will not be repeated here. Alternatively, the processing module 22 is configured to perform at least one of the other steps performed by the network device 102 in any of the above methods, which will not be repeated here.

In some embodiments, the transceiver module may include a sending module and/or a receiving module. The sending module and the receiving module may be separate or integrated together. Alternatively, the transceiver module may be interchanged with a transceiver.

In some embodiments, the processing module may be one module or may include multiple sub-modules. Alternatively, the multiple sub-modules respectively perform all or some of the steps required to be performed by the processing module. Alternatively, the processing module may be interchanged with a processor.

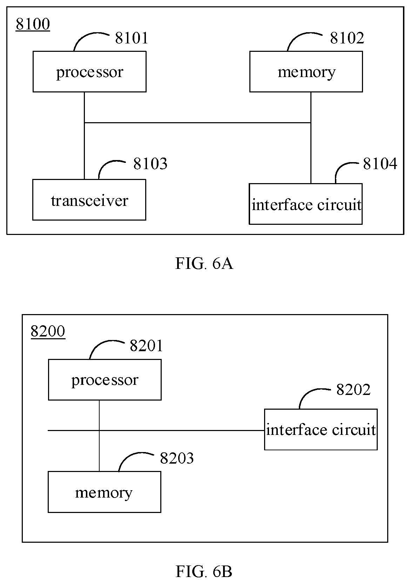

FIG. 6A is a block diagram illustrating a communication device 8100 according to an embodiment of the disclosure. The communication device 8100 may be a network device (such as, an access network device, a core network device, etc.), or a terminal (e.g., a UE, etc.), or a chip, a chip system, or a processor, etc., that supports the network device to implement any one of the above methods, or a chip, a chip system, or a processor, etc., that supports the terminal to implement any one of the above methods. The communication device 8100 may be configured to implement the method in the above method embodiments. For details, please refer to the description in the above method embodiments.

As illustrated in FIG. 6A, the communication device 8100 may include one or more processors 8101. The processor 8101 may be a general-purpose processor or a special-purpose processor, such as a baseband processor or a central processing unit. The baseband processor may be configured to process communication protocols and communication data, and the central processing unit may be configured to control communication devices (such as base stations, baseband chips, terminals, terminal chips, DU or CU, etc.) to perform computer programs and process computer program data. Alternatively, the communication device 8100 is configured to perform any one of the above methods. Alternatively, one or more processors 8101 are configured to call the instructions to cause the communication device 8100 to perform any one of the above methods.

In some embodiments, the communication device 8100 also includes one or more transceivers 8102. When the communication device 8100 includes one or more transceivers 8102, the transceiver 8102 performs at least one of the communication steps such as sending and/or receiving (e.g., S201, S301, S401, but not limited herein) in the above method, and the processor 8101 performs at least one of the other steps (e.g., S202, S302, but not limited herein). In an alternative embodiment, the transceiver may include a receiver and/or a transmitter, which may be separate or integrated together. Alternatively, the terms such as transceiver, transceiving unit, transceiving machine, transceiving circuit, interface circuit, and interface may be used interchangeably; the terms such as transmitter, transmitting unit, transmitting machine, and transmitting circuit may be used interchangeably; and the terms such as receiver, receiving unit, receiving machine, and receiving circuit may be used interchangeably.

In some embodiments, the communication device 8100 also includes one or more memories 8103 for storing data. Alternatively, all or some of the memory 8103 may be located outside the communication device 8100. In an alternative embodiment, the communication device 8100 may include one or more interface circuits 8104. Alternatively, the interface circuit 8104 is connected to the memory 8102. The interface circuit 8104 may be configured to receive data from the memory 8102 or other devices, and may be configured to send data to the memory 8102 or other devices. For example, the interface circuit 8104 may read data stored in the memory 8102 and send the data to the processor 8101.

The communication device 8100 in the description of the above embodiments may be a network device or a terminal, but the scope of the communication device 8100 described in the disclosure is not limited herein, and the structure of the communication device 8100 may not be limited by FIG. 6A. The communication device may be a stand-alone device or may be a part of a larger device. For example, the communication device may be: (1) a stand-alone IC, a chip, a chip system or a subsystem; (2) a collection of ICs including one or more ICs, alternatively, the collection of ICs also including storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 6B is a block diagram illustrating a chip 8200 according to an embodiment of the disclosure. For the case where the communication device 8100 may be a chip or a chip system, please refer to the block diagram of the chip 8200 illustrated in FIG. 6B, which is not limited herein.

The chip 8200 includes one or more processors 8201. The chip 8200 is configured to perform any one of the above methods.

In some embodiments, the chip 8200 also includes one or more interface circuits 8202. Alternatively, the terms such as interface circuit, interface, and transceiver pin may be used interchangeably. In some embodiments, the chip 8200 also includes one or more memories 8203 for storing data. Alternatively, all or part of the memory 8203 may be located outside of the chip 8200. Alternatively, the interface circuit 8202 is connected to the memory 8203. The interface circuit 8202 may be configured to receive data from the memory 8203 or other devices, and the interface circuit 8202 may be configured to send data to the memory 8203 or other devices. For example, the interface circuit 8202 may read data stored in the memory 8203 and send the data to the processor 8201.

In some embodiments, the interface circuit 8202 performs at least one of the communication steps such as sending and/or receiving (e.g., S201, S301, S401, but not limited herein) in the above method. The interface circuit 8202 performs communication steps such as sending and/or receiving in the above method, for example, the interface circuit 8202 performs data interaction between the processor 8201, the chip 8200, the memory 8203 or the transceiver device. In some embodiments, the processor 8201 performs at least one of other steps (e.g., S202, S302, but not limited herein).

The disclosure also provides a storage medium for storing instructions. When the instructions are run on the communication device 8100, the communication device 8100 is caused to implement any one of the above methods. Alternatively, the storage medium is an electronic storage medium. Alternatively, the storage medium is a computer-readable storage medium, but is not limited herein, and may also be a storage medium readable by other devices. Alternatively, the storage medium may be a non-transitory storage medium, but is not limited herein, and may also be a transitory storage medium.

The disclosure also provides a program product. When the program product is performed by the communication device 8100, the communication device 8100 is caused to implement any one of the above methods. Alternatively, the program product is a computer program product.

The disclosure also provides a computer program. When the computer program is run on a computer, the computer is caused to implement any one of the above methods.

Those skilled in the art will recognize that the units and algorithm steps of the various examples described in combination with embodiments disclosed herein may be implemented in electronic hardware or a combination of computer software and electronic hardware. Whether these functions are implemented in hardware or software depends on the specific application and design constraints of the technical solution. Those skilled in the art may employ different methods to implement the described functionality for each specific application, but such implementation should not be considered beyond the scope of the disclosure.

Those skilled in the art may understand that, for the sake of convenience and brevity, for the detailed work processes of the systems, devices, and units described above, please refer to the corresponding processes in the above method embodiments, which will not be repeated here.

The above description relates to detailed embodiments of the disclosure, but the protection scope of the disclosure is not limited thereto. Any changes or substitutions that may be easily envisaged by those skilled in the art within the technical scope disclosed in the disclosure should be included within the protection scope of the disclosure. Therefore, the protection scope of the disclosure should be determined by the protection scope of the appended claims.

## Claims

1. A method for indicating information, performed by a terminal and comprising:
receiving first configuration information sent by a network device, wherein the first configuration information is used for the terminal to determine a quantity of channel status information-reference signal (CSI-RS) ports; and
determining the quantity of CSI-RS ports based on the first configuration information, wherein the quantity of CSI-RS ports is greater than 32.

2. The method according to claim 1, wherein determining the quantity of CSI-RS ports based on the first configuration information comprises:
determining a first parameter and a second parameter based on the first configuration information; and
determining a product by multiplying a product of the first parameter and the second parameter by two as the quantity of CSI-RS ports based on the first parameter and the second parameter.

3. The method according to claim 2, wherein the first configuration information indicates first coefficients and second coefficients corresponding to a plurality of CSI-RS resources, and the second coefficients corresponding to the plurality of CSI-RS resources each are 1, wherein determining the first parameter and the second parameter based on the first configuration information comprises:
determining the first parameter as a sum of the first coefficients corresponding to the plurality of CSI-RS resources based on the first coefficients; and
determining the second parameter as the second coefficient based on the second coefficient.

4. The method according to claim 2, wherein the first configuration information indicates the first parameter and the second parameter.

5. The method according to claim 2, wherein the first configuration information indicates a codebook subset restriction condition, wherein determining the first parameter and the second parameter based on the first configuration information comprises:
determining the first parameter and the second parameter based on the codebook subset restriction condition.

6. The method according to claim 2, wherein the first configuration information indicates first coefficients and second coefficients corresponding to a plurality of CSI-RS resources, and the plurality of CSI-RS resources correspond to the same first coefficient and the same second coefficient, wherein determining the first parameter and the second parameter based on the first configuration information comprises:
determining a first index and a second index, wherein a product of the first index and the second index is equal to a total resource quantity of the plurality of CSI-RS resources;
determining the first parameter as a product of the first coefficient and the first index based on the first coefficient and the first index; and
determining the second parameter as a product of the second coefficient and the second index based on the second coefficient and the second index.

7. The method according to claim 6, wherein determining the first index and the second index comprises:
receiving indication information sent by the network device, wherein the indication information indicates the first index and the second index; and
determining the first index and the second index based on the indication information.

8. The method according to claim 2, wherein the first configuration information indicates, in a plurality of CSI-RS resources, a first coefficient and a second coefficient corresponding to each of L CSI-RS resources in a first resource group, and a third coefficient and a fourth coefficient corresponding to each of M CSI-RS resources in a second resource group, where L and M each are integers greater than 1 and a sum of L and M is equal to a total resource quantity of the plurality of CSI-RS resources, and the L CSI-RS resources in the first resource group correspond to the same first coefficient and the same second coefficient, and the M CSI-RS resources in the second resource group correspond to the same third coefficient and the same fourth coefficient, wherein the first coefficient is not equal to the third coefficient and/or the second coefficient is not equal to the fourth coefficient, wherein determining the first parameter and the second parameter based on the first configuration information comprises:
determining the first parameter and the second parameter based on the first coefficient, the second coefficient, the third coefficient, and the fourth coefficient.

9. The method according to claim 8, wherein determining the first parameter and the second parameter based on the first coefficient, the second coefficient, the third coefficient, and the fourth coefficient comprises:
in a case that a sum of second coefficients corresponding to the L CSI-RS resources in the first resource group is equal to the fourth coefficient, determining the first parameter as a total sum of the first coefficient and a sum of third coefficients corresponding to the M CSI-RS resources in the second resource group , and determining the second parameter to be equal to the fourth coefficient; or
in a case that a sum of third coefficients corresponding to the M CSI-RS resources in the second resource group is equal to the first coefficient, determining the first parameter to be equal to the first coefficient, and determining the second parameter as a total sum of the fourth coefficient and a sum of the second coefficients corresponding to the L CSI-RS resources in the first resource group; or
determining the first parameter as a total sum of the first coefficient and a sum of third coefficients corresponding to the M CSI-RS resources in the second resource group, and determining the second parameter as a total sum of the fourth coefficient and a sum of the second coefficients corresponding to the L CSI-RS resources in the first resource group.

10. The method according to any one of claims 3, 6 to 9, further comprising:
receiving second configuration information sent by the network device, wherein the second configuration information indicates one CSI-RS resource set, and the CSI-RS resource set comprises the plurality of CSI-RS resources.

11. The method according to claim 2, wherein the first configuration information indicates first coefficients and second coefficients corresponding to a plurality of CSI-RS resources, and the plurality of CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a first coefficient corresponding to CSI-RS resources in a first resource group of the two resource groups is equal to a first coefficient corresponding to CSI-RS resources in a second resource group of the two resource groups, wherein determining the first parameter and the second parameter based on the first configuration information comprises:
determining the first parameter to be equal to the first coefficient based on the first coefficient; and
determining the second parameter as a total sum of a sum of second coefficients corresponding to all the CSI-RS resources in the first resource group and a sum of second coefficients corresponding to all the CSI-RS resources in the second resource group based on the second coefficients.

12. The method according to claim 2, wherein the first configuration information indicates first coefficients and second coefficients corresponding to a plurality of CSI-RS resources, and the plurality of CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a second coefficient corresponding to CSI-RS resources in a first resource group of the two resource groups is equal to a second coefficient corresponding to CSI-RS resources in a second resource group of the two resource groups, wherein determining the first parameter and the second parameter based on the first configuration information comprises:
determining the first parameter as a total sum of a sum of first coefficients corresponding to all the CSI-RS resources in the first resource group and a sum of first coefficients corresponding to all the CSI-RS resources in the second resource group based on the first coefficients; and
determining the second parameter to be equal to the second coefficient based on the second coefficient.

13. The method according to claim 2, wherein the first configuration information indicates first coefficients and second coefficients corresponding to a plurality of CSI-RS resources, and the plurality of CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is greater than a first coefficient corresponding to CSI-RS resources in a second resource group of the two resource groups, and the first coefficient corresponding to the CSI-RS resources in the first resource group is equal to a sum of first coefficients corresponding to all the CSI-RS resources in the second resource group, wherein determining the first parameter and the second parameter based on the first configuration information comprises:
determining the first parameter as the first coefficient corresponding to the CSI-RS resources of the first resource group based on the first coefficient; and
determining the second parameter as a total sum of a sum of second coefficients corresponding to all the CSI-RS resources in the first resource group and the second coefficient corresponding to the CSI-RS resources in the second resource group based on the second coefficients.

14. The method according to claim 2, wherein the first configuration information indicates first coefficients and second coefficients corresponding to a plurality of CSI-RS resources, and the plurality of CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is less than a first coefficient corresponding to CSI-RS resources in a second resource group of the two resource groups, and a sum of second coefficients corresponding to all the CSI-RS resources in the first resource group is equal to the second coefficient corresponding to the CSI-RS resources in the second resource group, wherein determining the first parameter and the second parameter based on the first configuration information comprises:
determining the first parameter as a total sum of a sum of first coefficients corresponding to the CSI-RS resources of the second resource group and the first coefficient corresponding to the CSI-RS resources of the first resource group based on the first coefficients; and
determining the second parameter as the second coefficient corresponding to the CSI-RS resources of the second resource group based on the second coefficient.

15. The method according to claim 2, wherein the first configuration information indicates first coefficients and second coefficients corresponding to a plurality of CSI-RS resources, and the plurality of CSI-RS resources belong to a plurality of resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the plurality of resource groups is greater than a first coefficient corresponding to CSI-RS resources in any of other resource groups in the plurality of resource groups, and the first coefficient corresponding to the CSI-RS resources in the first resource group is equal to a sum of first coefficients corresponding to all the CSI-RS resources in any of the other resource groups, wherein determining the first parameter and the second parameter based on the first configuration information comprises:
determining the first parameter as the first coefficient corresponding to the CSI-RS resources of the first resource group based on the first coefficient; and
determining the second parameter as a total sum of a sum of second coefficients corresponding to all the CSI-RS resources in the first resource group and a sum of second coefficients corresponding to CSI-RS resources respectively in the other resource groups based on the second coefficients.

16. The method according to claim 2, wherein the first configuration information indicates first coefficients and second coefficients corresponding to a plurality of CSI-RS resources, and the plurality of CSI-RS resources belong to a plurality of resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a second coefficient corresponding to CSI-RS resources in a first resource group in the plurality of resource groups is greater than a second coefficient corresponding to CSI-RS resources in any of other resource groups, and the second coefficient corresponding to the CSI-RS resources in the first resource group is equal to a sum of second coefficients corresponding to all the CSI-RS resources in any of the other resource groups, wherein determining the first parameter and the second parameter based on the first configuration information comprises:
determining the first parameter as a total sum of a sum of first coefficients corresponding to all the CSI-RS resources in the first resource group and a sum of first coefficients corresponding to CSI-RS resources respectively in the other resource groups based on the first coefficients; and
determining the second parameter as the second coefficient corresponding to the CSI-RS resources of the first resource group based on the second coefficient.

17. The method according to any one of claims 11 to 16, further comprising:
receiving third configuration information sent by the network device, wherein the third configuration information indicates a plurality of CSI-RS resource sets, the plurality of CSI-RS resource sets comprise the plurality of CSI-RS resources, and CSI-RS resources belonging to the same CSI-RS resource set belong to the same resource group.

18. The method according to any one of claims 2 to 17, wherein the first parameter is a quantity of ports in a horizontal dimension, and the second parameter is a quantity of ports in a vertical dimension.

19. A method for indicating information, performed by a network device and comprising:
sending first configuration information to a terminal, wherein the first configuration information is used for the terminal to determine a quantity of channel status information-reference signal (CSI-RS) ports, and the quantity of CSI-RS ports is greater than 32.

20. The method according to claim 19, wherein
the first configuration information is used for the terminal to determine a first parameter and a second parameter, and the first parameter and the second parameter are used for the terminal to determine that the quantity of CSI-RS ports is a product by multiplying a product of the first parameter and the second parameter by two.

21. The method according to claim 20, wherein the first configuration information indicates first coefficients and second coefficients corresponding to a plurality of CSI-RS resources, and the second coefficients corresponding to the plurality of CSI-RS resources each are 1,
wherein the first coefficients are used for the terminal to determine that the first parameter is a sum of the first coefficients corresponding to the plurality of CSI-RS resources; and
the second coefficients are used for the terminal to determine that the second parameter is the second coefficient.

22. The method according to claim 20, wherein the first configuration information indicates the first parameter and the second parameter.

23. The method according to claim 20, wherein the first configuration information indicates a codebook subset restriction condition, and
the codebook subset restriction condition is used for the terminal to determine the first parameter and the second parameter.

24. The method according to claim 20, wherein the first configuration information indicates first coefficients and second coefficients corresponding to a plurality of CSI-RS resources, and the plurality of CSI-RS resources correspond to the same first coefficient and the same second coefficient,
wherein the first parameter is determined as a product of the first coefficient and a first index in a case the first coefficient is used for the terminal to determine the first index; and
the second parameter is determined as a product of the second coefficient and a second index in a case that the second coefficient is used for the terminal to determine the second index.

25. The method according to claim 24, further comprising:
sending indication information to the terminal, wherein the indication information indicates the first index and the second index.

26. The method according to claim 20, wherein the first configuration information indicates, in a plurality of CSI-RS resources, a first coefficient and a second coefficient corresponding to each of L CSI-RS resources in a first resource group, and a third coefficient and a fourth coefficient corresponding to each of M CSI-RS resources in a second resource group, where L and M each are integers greater than 1 and a sum of L and M is equal to a total resource quantity of the plurality of CSI-RS resources, and the L CSI-RS resources in the first resource group correspond to the same first coefficient and the same second coefficient, and the M CSI-RS resources in the second resource group correspond to the same third coefficient and the same fourth coefficient, wherein the first coefficient is greater than the third coefficient, and the second coefficient is less than the fourth coefficient,
wherein the first coefficient, the second coefficient, the third coefficient, and the fourth coefficient are used for the terminal to determine the first parameter and the second parameter.

27. The method according to claim 26, wherein
in a case that a sum of second coefficients corresponding to the L CSI-RS resources in the first resource group is equal to the fourth coefficient, the first coefficient, the second coefficient, the third coefficient, and the fourth coefficient are used for the terminal to determine that the first parameter is a total sum of a sum of the first coefficient and third coefficients corresponding to the M CSI-RS resources in the second resource group, and the second parameter is equal to the fourth coefficient; or
in a case that a sum of third coefficients corresponding to the M CSI-RS resources in the second resource group is equal to the first coefficient, the first coefficient, the second coefficient, the third coefficient, and the fourth coefficient are used for the terminal to determine that the first parameter is equal to the first coefficient, and the second parameter is a total sum of a sum of the fourth coefficient and the second coefficients corresponding to the L CSI-RS resources in the first resource group ; or
the first coefficient, the second coefficient, the third coefficient, and the fourth coefficient are used for the terminal to determine that the first parameter is a total sum of the first coefficient and a sum of third coefficients corresponding to the M CSI-RS resources in the second resource group, and the second parameter is a total sum of the fourth coefficient and a sum of the second coefficients corresponding to the L CSI-RS resources in the first resource group.

28. The method according to any one of claims 21, 24 to 27, further comprising:
sending second configuration information to the terminal, wherein the second configuration information indicates one CSI-RS resource set, and the CSI-RS resource set comprises the plurality of CSI-RS resources.

29. The method according to claim 20, wherein the first configuration information indicates first coefficients and second coefficients corresponding to a plurality of CSI-RS resources, and the plurality of CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a first coefficient corresponding to CSI-RS resources in a first resource group of the two resource groups is equal to a first coefficient corresponding to CSI-RS resources in a second resource group of the two resource groups,
wherein the first coefficient is used for the terminal to determine that the first parameter is equal to the first coefficient; and
the second coefficients are used for the terminal to determine that the second parameter is a total sum of a sum of second coefficients corresponding to all the CSI-RS resources in the first resource group and a sum of second coefficients corresponding to all the CSI-RS resources in the second resource group.

30. The method according to claim 20, wherein the first configuration information indicates first coefficients and second coefficients corresponding to a plurality of CSI-RS resources, and the plurality of CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, and a second coefficient corresponding to CSI-RS resources in a first resource group of the two resource groups is equal to a second coefficient corresponding to CSI-RS resources in a second resource group of the two resource groups,
wherein the first coefficients are used for the terminal to determine that the first parameter is a total sum of a sum of first coefficients corresponding to all the CSI-RS resources in the first resource group and a sum of first coefficients corresponding to all the CSI-RS resources in the second resource group; and
the second coefficient is used for the terminal to determine that the second parameter is equal to the second coefficient.

31. The method according to claim 20, wherein the first configuration information indicates first coefficients and second coefficients corresponding to a plurality of CSI-RS resources, and the plurality of CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is greater than a first coefficient corresponding to CSI-RS resource in a second resource group of the two resource groups, and the first coefficient corresponding to the CSI-RS resources in the first resource group is equal to a sum of first coefficients corresponding to all the CSI-RS resources in the second resource group,
wherein the first coefficient is used for the terminal to determine that the first parameter is the first coefficient corresponding to the CSI-RS resources of the first resource group; and
the second coefficients are configured for the terminal to determine that the second parameter is a total sum of a sum of second coefficients corresponding to all the CSI-RS resources in the first resource group and the second coefficient corresponding to the CSI-RS resources in the second resource group.

32. The method according to claim 20, wherein the first configuration information indicates first coefficients and second coefficients corresponding to a plurality of CSI-RS resources, and the plurality of CSI-RS resources belong to two resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the two resource groups is less than a first coefficient corresponding to CSI-RS resources in a second resource group of the two resource groups, and a sum of second coefficients corresponding to all the CSI-RS resources in the first resource group is equal to the second coefficient corresponding to the CSI-RS resources in the second resource group,
wherein the first coefficients are used for the terminal to determine that the first parameter is a total sum of a sum of first coefficients corresponding to the CSI-RS resources of the second resource group and the first coefficient corresponding to the CSI-RS resources of the first resource group; and
the second coefficient is used for the terminal to determine that the second parameter is the second coefficient corresponding to the CSI-RS resources of the second resource group.

33. The method according to claim 20, wherein the first configuration information indicates first coefficients and second coefficients corresponding to a plurality of CSI-RS resources, and the plurality of CSI-RS resources belong to a plurality of resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a first coefficient corresponding to CSI-RS resources in a first resource group of the plurality of resource groups is greater than a first coefficient corresponding to CSI-RS resources in any of other resource groups in the plurality of resource groups, and the first coefficient corresponding to the CSI-RS resources in the first resource group is equal to a sum of first coefficients corresponding to all the CSI-RS resources in any of the other resource groups,
wherein the first coefficient is used for the terminal to determine that the first parameter is the first coefficient corresponding to the CSI-RS resources of the first resource group; and
the second coefficients are used for the terminal to determine that the second parameter is a total sum of a sum of second coefficients corresponding to all the CSI-RS resources in the first resource group and a sum of second coefficients corresponding to CSI-RS resources respectively in the other resource groups.

34. The method according to claim 20, wherein the first configuration information indicates first coefficients and second coefficients corresponding to a plurality of CSI-RS resources, and the plurality of CSI-RS resources belong to a plurality of resource groups, different CSI-RS resources in the same resource group correspond to the same first coefficient and the same second coefficient, a product of a first coefficient and a second coefficient corresponding to CSI-RS resources in one resource group is not equal to a product of a first coefficient and a second coefficient corresponding to CSI-RS resources in a different resource group, a second coefficient corresponding to CSI-RS resources in a first resource group of the plurality of resource groups is greater than a second coefficient corresponding to CSI-RS resources in any of other resource groups, and the second coefficient corresponding to the CSI-RS resources in the first resource group is equal to a sum of second coefficients corresponding to all the CSI-RS resources in any of the other resource groups,
wherein the first coefficients are configured for the terminal to determine the first parameter as a total sum of a sum of first coefficients corresponding to all the CSI-RS resources in the first resource group and a sum of first coefficients corresponding to CSI-RS resources respectively in the other resource groups; and
the second coefficient is used for the terminal to determine that the second parameter is the second coefficient corresponding to the CSI-RS resources of the first resource group.

35. The method according to any one of claims 29 to 34, further comprising:
sending third configuration information to the terminal, wherein the third configuration information indicates a plurality of CSI-RS resource sets, the plurality of CSI-RS resource sets comprise the plurality of CSI-RS resources, and CSI-RS resources belonging to the same CSI-RS resource set belong to the same resource group.

36. The method according to any one of claims 20 to 35, wherein the first parameter is a quantity of ports in a horizontal dimension, and the second parameter is a quantity of ports in a vertical dimension.

37. A method for indicating information, comprising:
sending, by a network device, first configuration information to a terminal, wherein the first configuration information is used for the terminal to determine a quantity of channel status information-reference signal (CSI-RS) ports;
receiving, by the terminal, the first configuration information sent by the network device;
and
determining, by the terminal, the quantity of CSI-RS ports based on the first configuration information, wherein the quantity of CSI-RS ports is greater than 32.

38. A terminal, comprising:
a transceiver module, configured to receive first configuration information sent by a network device, wherein the first configuration information is used for the terminal to determine a quantity of channel status information-reference signal (CSI-RS) ports; and
a processing module, configured to determine the quantity of CSI-RS ports based on the first configuration information, wherein the quantity of CSI-RS ports is greater than 32.

39. A network device, comprising:
a transceiver module, configured to send first configuration information to a terminal, wherein the first configuration information is used for the terminal to determine a quantity of channel status information-reference signal (CSI-RS) ports, and the quantity of CSI-RS ports is greater than 32.

40. A communication device, comprising:
one or more processors; and
a memory coupled to the processor, and storing instructions which, when executed by the processor, cause the communication device to perform the method according to any one of claims 1 to 18.

41. A communication device, comprising:
one or more processors; and
a memory coupled to the processor, and storing instructions which, when executed by the processor, cause the communication device to perform the method according to any one of claims 19 to 36.

42. A communication system, comprising a terminal and a network device, wherein the terminal is configured to perform the method according to any one of claims 1 to 18, and the network device is configured to perform the method according to any one of claims 19 to 36.

43. A storage medium, storing instructions which, when run on a communication device, cause the communication device to perform the method according to any one of claims 1 to 18 or any one of claims 19 to 36.
